# EUROPEAN PATENT APPLICATION

(11) **EP 4 831 760 A1**
(43) Date of publication of application: **28.10.2026**
(21) Application number: 26171853.0
(22) Date of filing: 13.04.2026
(51) Int. Cl.: G05B 23/02

(54) **SYSTEMS, APPARATUSES, METHODS, AND COMPUTER PROGRAM PRODUCTS FOR ROOT CAUSE IDENTIFICATION AND GUIDANCE FOR ABNORMAL PROCESS CONDITIONS IN PROCESS PLANTS**

(30) Priority: 25.04.2025 IN 202511040067
(71) Applicant: Honeywell International Inc., Charlotte, NC 28202 (US)
(72) Inventor: NARAYAN, Anand, Charlotte, 28202 (US); KONIKI, Ramesh Babu, Charlotte, 28202 (US); PRABHU, Rakshitha, Charlotte, 28202 (US); RAVI, Rahul, Charlotte, 28202 (US)
(74) Representative: Haseltine Lake Kempner LLP

(57) **Abstract**

Embodiments of the present disclosure provide techniques for identifying root causes and generating guidance for abnormal conditions in process plants. Plant data associated with a process plant may be obtained. A knowledge graph may be generated based on the plant data. The knowledge graph may include a plurality of operator action nodes corresponding to a plurality of operator actions associated with an abnormal condition. An operator action data may be generated for the abnormal condition based on the knowledge graph. The operator action data may comprise the plurality of operator actions. A set of corrective action may be generated using one or more machine learning models and based on the operator action data. The set of corrective actions may include a set of unique operator actions from the operator action data. The set of corrective actions may be provided for display on a user device.

## Description

### CROSS REFERENCE TO RELATED APPLICATIONS

This application claims priority to India Application No. 202511040067, filed on April 25, 2025, the contents of which are hereby incorporated herein by reference in their entirety.

### TECHNOLOGICAL FIELD

Embodiments of the present disclosure relate generally to managing abnormal conditions in process plants; and particularly to systems, apparatuses, methods, and computer program products for root cause identification and guidance for abnormal process conditions in process plants.

### BACKGROUND

Various embodiments of the present disclosure address technical challenges related to managing abnormal conditions in process plants. Through applied effort, ingenuity, and innovation many deficiencies of existing techniques and systems have been solved by developing solutions that are in accordance with the embodiments as discussed herein, many examples of which are described in detail herein.

### BRIEF SUMMARY

Various embodiments described herein relate to systems, apparatuses, methods, and computer program products for root cause identification and guidance for abnormal process condition in process plants.

In accordance with one aspect of the present disclosure, a computer-implemented method for root cause identification and guidance for abnormal process condition in process plants is provided. In some embodiments, the computer-implemented method comprises obtaining, by one or more processors and from one or more data sources, plant data associated with a process plant; generating, by the one or more processors, a knowledge graph based on the plant data, wherein the knowledge graph comprises a plurality of operator action nodes corresponding to a plurality of operator actions associated with an abnormal condition; generating, by the one or more processors, an operator action data for the abnormal condition based on the knowledge graph, wherein the operator action data comprises the plurality of operator actions; generating, by the one or more processors and using one or more machine learning models, a set of corrective actions based on the operator action data, wherein the set of corrective actions comprises a set of unique operator actions from the operator action data; and providing, by the one or more processors, the set of corrective actions for display on a user device.

In some embodiments, the method further comprises determining a root cause of the abnormal condition based on the knowledge graph and using an ensemble machine learning model.

In some embodiments, the method further comprises generating, using a generative AI model, one or more summaries based on the operator action data or the set of corrective actions.

In some embodiments, generating the knowledge graph comprises generating one or more relationship maps based on the plant data; and generating the knowledge graph based on the one or more relationship maps.

In some embodiments, the one or more data sources comprises one or more applications or systems associated with an operational technology network, wherein obtaining the plant data comprises detecting one or more applications or systems using an agentic system.

In some embodiments, the one or more data sources comprise one or more of a distributed control system, a piping and instrumentation diagram, or process flow diagram.

In some embodiments, the plurality of operator action nodes is connected to one or more alarm event nodes, and wherein the one or more alarm event nodes are connected to an alarm type node corresponding to the abnormal condition.

In accordance with another aspect of the present disclosure, an apparatus is provided. The apparatus in some embodiments includes at least one processor and at least one non-transitory memory, the at least one non-transitory memory having computer-coded instructions stored thereon. The computer-coded instructions in execution with the at least one processor causes the apparatus to perform any of the example computer-implemented methods described herein. In some other embodiments, the apparatus includes means for performing each step of any of the computer-implemented methods described herein.

In accordance with another aspect of the present disclosure, a computer program product is provided. The computer program product in some embodiments includes at least one non-transitory computer-readable storage medium having computer program code stored thereon. The computer program code in execution with at least one processor is configured for performing any one or the example computer-implemented methods described herein.

The above summary is provided merely for purposes of summarizing some example embodiments to provide a basic understanding of some aspects of the present disclosure. Accordingly, it will be appreciated that the above-described embodiments are merely examples and should not be construed to narrow the scope or spirit of the disclosure in any way. It will be appreciated that the scope of the present disclosure encompasses many potential embodiments in addition to those here summarized, some of which will be further described below.

### BRIEF DESCRIPTION OF THE DRAWINGS

Having thus described the embodiments of the disclosure in general terms, reference now will be made to the accompanying drawings, which are not necessarily drawn to scale, and wherein:
FIG. 1A illustrates an example system environment within which embodiments of the present disclosure may operate.
FIG. 1B illustrates an example process control and automation system in accordance with at least one example embodiment of the present disclosure.
FIG. 2 illustrates a block diagram of an example apparatus in accordance with an example embodiment of the present disclosure.
FIG. 3A illustrates an example data flow diagram for generating a knowledge graph in accordance with at least one example embodiment of the present disclosure.
FIGS. 3B-3C illustrate visualizations of operational examples of relationship maps in accordance with at least some embodiments of the present disclosure.
FIG. 3D illustrates an operational example of a knowledge graph in accordance with at least some embodiments of the present disclosure.
FIG. 4A illustrates an example data flow diagram for operation action and root cause analysis in accordance with at least one example embodiment of the present disclosure.
FIG. 4B illustrates an example transient state detection algorithm in accordance with at least one example embodiment of the present disclosure.
FIG. 5A illustrates an example data flow diagram for generating summaries in accordance with at least one example embodiment of the present disclosure.
FIG. 5B illustrates example summaries in accordance with at least one example embodiment of the present disclosure.
FIG. 6 illustrates an example implementation of an abnormal condition management system in accordance with at least one example embodiment of the present disclosure.
FIG. 7 illustrates an illustrates an example flowchart depicting an example process in accordance with at least one example embodiment of the present disclosure.
FIG. 8 illustrates an illustrates an example flowchart depicting an example process in accordance with at least one example embodiment of the present disclosure.

### DETAILED DESCRIPTION

Embodiments of the present disclosure now will be described more fully hereinafter with reference to the accompanying drawings, in which some, but not all, embodiments of the disclosure are shown. Indeed, embodiments of the present disclosure may be embodied in many different forms and should not be construed as limited to the embodiments set forth herein, rather, these embodiments are provided so that this disclosure will satisfy applicable legal requirements. The term "or" is used herein in both the alternative and conjunctive sense, unless otherwise indicated.

The terms "illustrative" and "example" are used to be examples with no indication of quality level. Terms such as "computing," "determining," "generating," and/or similar words are used herein interchangeably to refer to the creation, modification, or identification of data. Further, "based on," "based on in part on," "based at least on," "based upon," and/or similar words are used herein interchangeably in an open-ended manner such that they do not indicate being based only on or based solely on the referenced element or elements unless so indicated. Like numbers refer to like elements throughout.

It should be understood at the outset that although illustrative implementations of one or more aspects are illustrated below, the disclosed systems, apparatuses, methods, and computer program products may be implemented using any number of techniques, whether currently known or not yet in existence. The disclosure should in no way be limited to the illustrative implementations, drawings, and techniques illustrated below, but may be modified within the scope of the appended claims along with their full scope of equivalents. While values for dimensions of various elements may be disclosed, the drawings may not be to scale.

### Overview and Technical Improvements

Example embodiments disclosed herein address technical problems associated with managing abnormal process conditions (also referred to herein as abnormal conditions) in process plants. Console operators monitor plant processes continuously and take operator actions (e.g., control actions) to keep the processes within optimum limits. Console operators may monitor thousands of process parameters such as pressure, level, flow, or temperature in rotating shifts for complex process plants such as refineries or petrochemical complex. In various contexts, a process deviation which triggers alarms necessitate the console operator to take actions to bring the process parameters within safe limits. If the actions taken are not proper, it can lead to multiple impacts such as process upset; plant shutdown, product off-spec conditions, environment impacts such as flaring, equipment damage, fire, gas leak, and/or other adverse impacts.

Console operators rely on in-house or custom solutions to identify root causes and document best practices for handling abnormal conditions (e.g., alarms). For an operations team in a process plant, handling of abnormal conditions and root cause identification is essential. Console operators face various challenges in responding to alarm conditions including, but not limited to, lack of quick solution to view how expert console operators have handled alarm events in the past; procedures/alarm analysis data prepared by subject matter experts not covering all alarm responses as it will be time consuming to review all historical data and practically impossible; new console operator may take signification amount of time to identify root cause of alarms and actions to resolve alarms; and simulator based training do not cover all alarm scenarios.

Moreover, in various contexts, console operators are under constant pressure to handle various process conditions to achieve production targets in a safe manner. However, existing control systems (e.g., distributed control systems or other control systems) utilized in the plant to control and/or automate the processes do not include an active help/guidance system that can understand the current process conditions and offer guidance to the console operators to handle abnormal conditions. Existing techniques of using pre-defined situation handling (e.g., alarm objective analysis) documents, simulated training systems such as OTS (Operator training system) for practicing abnormal situation handling, or expert guidance over the shoulder offer limited help as these techniques do not leverage actual process data scenarios from the plants and rely mostly on expertise or engineering driven best practices. Further, process experts cannot rely on day-today operations logs to identify new scenarios of occurrence or new methods used by operators to handle situations, as these may not accurately describe the conditions. In several scenarios, the operational aspect of the system evolves over time and the design configuration, and the operational usage have gaps. These gaps are seldom resolved regularly. For example, piping and instrumentation diagrams (P&IDs) and process flow diagrams (PFDs) based process design may not necessarily match DCS configuration. Further, in various contexts, including brown field installations, evaluation of the impact of changes in engineering configurations poses challenges to users, such as process engineers and subject matter experts, in analyzing complex assets.

Example embodiments of the present disclosure address various technical problems associated with managing abnormal process conditions, including the above-noted challenges. Example embodiments of the present disclosure identify differences between design data sources such as P&ID, PFDs, and DCS configuration. Example embodiments identify recent configuration or system changes which may cause alarms. Example embodiments, identify equipment to equipment relationships/connections, equipment to instrument relationships/connections, process flow relationships/connections, and/or control and safety relationships/connections.

Example embodiments provide techniques for autonomous identification of root cause(s) for abnormal conditions and provides guidance (e.g., systemic guidance) for operators (e.g., console operators) that facilitate prompt and accurate resolution of abnormal conditions. Example embodiments enable implementation of such systemic guidance in DCS or other control and automation system. Example embodiments predict future occurrence of abnormal conditions, for example, by automatically tracking root causes. Example embodiments automatically ingest data from disparate data sources across engineering, DCS, historical archives, health monitoring systems into a coherent plant knowledge graph driven by an underlying schema or ontology covering process, control and operational relationships.

Example embodiments leverage design data, engineering configuration data and operations data from various data sources including DCS, operator logbook data and shift log data, control narratives, alarm rationalization data, and/or control loop data to generate a knowledge graph (e.g., plant knowledge graph) for a process plant. Example embodiments, analyze the knowledge graph using advanced analytics to provide alarm guidance, root cause analysis, and predictive capabilities and functionalities. Example embodiments identify operator actions during abnormal conditions such as process alarms and trips using the connections in the knowledge graph and historical events and process values. Example embodiments identify a set of operator actions (e.g., distinct set of operator actions) for handing abnormal conditions. Example embodiments identify various operator actions for abnormal conditions at various times of occurrence based on the historical process history and historical events determined from DCS, and group to create the set of operator actions using either data analytics technique such as machine learning and/or language models. In this regard, example embodiments analyze operator actions which were taken on tags-whether in same process unit, different process units, or different instances of control systems-and enables improved and prompt resolution of issues caused by engineering configuration changes, as well as facilitate improved collaboration between engineering and operation teams in a process plant. Example embodiments identify a set of operator actions (e.g., distinct set of operator actions) for handing abnormal conditions. Example embodiments identify various operator actions for abnormal conditions at various times of occurrence based on the historical process history and historical events determined from DCS, and group to create the set of operator actions using either data analytics technique such as machine learning and/or language models. Example embodiments leverage generative AI models such as pre-trained language models to create the classifications/groupings of operator actions based on occurrence across different instances of abnormal condition for same type of abnormal condition and generates summaries of root cause analysis and operation action response for abnormal conditions.

Example embodiments provide a feedback mechanism for experts to review, edit, and approve the classifications/groupings. Example embodiments provide the grouping of operator actions (e.g., set of operator actions) and summaries for display on a user device in response to subsequent occurrence of the same type of abnormal condition. Example embodiments provide a scalable system configured to support large data volumes along with component(s) and techniques for autonomously detecting applications and systems associated with an operational technology (OT) network (e.g., device control and application network which may correspond to level 1, level 2, and/or level 3 in a Purdue model) and mapping data associated with such applications and systems to generate the knowledge graph. Example embodiments automatically identify differences between design time configurations with operational setup and facilities or provides automatic resolution of the conflicts. Example embodiments enable users, including process engineers and subject matter experts, to visualize and analyze the impact of configuration changes on the system and processes.

In this regard, example embodiments provide various technical advantages including automatic creation of a knowledge graph from system data, engineering configurations and process design documentation which provides a single source of truth for multiple applications; accurate identification of operation actions by using machine learning, statistical data analysis, historical data and knowledge graph data that includes both logical and physical connections in the plant for identification of operator actions and root cause; improved accuracy of root causes for abnormal conditions by using a hybrid approach for identifying root cause (e.g., using both process and application data); enabling applications to access and visualize various information for different users across a plant by leveraging a knowledge graph for analysis and storing the results of the analysis; providing scalable, flexible and user friendly techniques to represent information to users (e.g., operators, process engineers, and/or the like) by leveraging language models to generate summaries and to classify of operator actions and root causes; explainability of the outputs/results of the root cause identification and guidance process described herein by providing access to outputs/results from various phases, including various phases of ensemble of machine learning models, and related information from the knowledge graph.

In this regard, example embodiments provide various technical advantages and improves various technical fields and technology including the technical field of control and automation.

### Definitions

Many modifications and other embodiments of the disclosure set forth herein will come to mind to one skilled in the art to which this disclosure pertains having the benefit of the teachings presented in the foregoing description and the associated drawings. Therefore, it is to be understood that the embodiments are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," "in some embodiments," and the like generally mean that the particular feature, structure, or characteristic following the phrase may be included in at least one embodiment of the present disclosure, and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments, or it may be excluded.

As used herein, the terms "data," "content," "information," and similar terms may be used interchangeably to refer to data capable of being transmitted, received, or stored in accordance with embodiments of the present disclosure. Thus, use of any such terms should not be taken to limit the spirit and scope of embodiments of the present disclosure. Further, where a computing device is described herein to receive data from another computing device, it will be appreciated that the data may be received directly from another computing device or may be received indirectly via one or more intermediary computing devices, such as, for example, one or more servers, relays, routers, network access points, base stations, hosts, or the like, sometimes referred to herein as a "network." Similarly, where a computing device is described herein to send data to another computing device, it will be appreciated that the data may be sent directly to another computing device or may be sent indirectly via one or more intermediary computing devices, such as, for example, one or more servers, relays, routers, network access points, base stations, hosts, or the like.

As used herein, the term "circuitry" refers to particular hardware configured to perform the functions associated with the particular circuitry as described herein. In some embodiments, circuitry may be used as part of (a) hardware-only circuit implementations (e.g., implementations in analog circuitry or digital circuitry); (b) combinations of circuits and computer program product(s) comprising software or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. In some embodiments, "circuitry" may include processing circuitry, storage media, network interfaces, input/output devices, or the like. As a further example, as used herein, the term "circuitry" also includes an implementation comprising one or more processors or portion(s) thereof and accompanying software or firmware. As another example, the term "circuitry" as used herein also includes, for example, a baseband integrated circuit or applications processor integrated circuit for a mobile phone or a similar integrated circuit in a server, a cellular network device, other network device, or other computing device.

As used herein, a "computer-readable storage medium," refers to a physical storage medium (e.g., volatile, or non-volatile memory device), and may be differentiated from a "computer-readable transmission medium," which refers to an electromagnetic signal. A computer-readable storage medium may be a non-transitory medium.

As used herein, the terms "data structure," "data object," or "data set" refer interchangeably to data capable of being transmitted, received, or stored. For example, a predicted asset may be associated with one or more data elements or values in a computer-readable storage medium or computer-readable transmission medium, that represents content that is configured for use or display by one or more software applications, services, microservices, or the like.

As used herein, the terms "application," "software application," "app," "computer program," "service," or similar terms refer to a computer program or group of computer programs designed to perform coordinated functions, tasks, or activities. Such computer programs may be operated by or for the benefit of a user or group of users. An application may be configured to provide access to one or more services provided by an entity. For example, an application may be configured to provide access to services provided by visual media content provider systems. An application may run on a server or group of servers, such as, but not limited to, web servers and application servers. In some embodiments, an application may be run on or across one or more other computing devices (e.g., user devices). For example, an application may be configured to be accessed via a web browser (e.g., a website accessed via the Internet using a browser), a dedicated client running on a user device, or the like. In some examples, an application may be configured for use by and interaction with one or more local, networked or remote computing devices.

The term "client computing device," "client device," "client computing entity," "user device" and similar terms may be used interchangeably to refer to a computer comprising at least one processor and at least one memory. In some embodiments, the client computing device may further comprise one or more of: a display device for rendering one or more of a graphical user interface, a vibration motor for a haptic output, a speaker for an audible output, a mouse, a keyboard or touch screen, a global position system (GPS) transmitter and receiver, a radio transmitter and receiver, a microphone, a camera, a biometric scanner (e.g., a fingerprint scanner, an eye scanner, a facial scanner, etc.), or the like. Additionally, the term "client computing device" and the aforementioned similar terminology may refer to computer hardware or software that is configured to access a service or functionality offered by a system such as system 160 described herein, for example, a service or functionality that is made available by a server. Such a server may be in a different location or another computing system, in which case the client computing device may access the server by way of a network. Client computing devices may include, without limitation, smart phones, tablet computers, kiosk, terminal, laptop computers, wearables, personal computers, enterprise computers, or the like. Client computing devices, as described herein, may communicate with or otherwise access a system 160, via one or more networks. In some embodiments, the at least one processor and the at least one memory need not be physically co-located with other elements of the client computing device (e.g., in a terminal environment, in which a display may be separated from a server-based processor or memory).

In some embodiments, a client computing device may be associated with a particular operator such as, for example a console operator in a process plant. In some embodiments, a client computing device may be a general purpose computing device having special purpose computer programming stored or executed thereon (e.g., a program, application, or web browser session running on a personal computer or smartphone). In some embodiments, a client computing device may be configured as a terminal or other remote viewing apparatus configured to display graphical user interfaces and associated information generated on a remote computing device. In some embodiments, a client computing device may be a special purpose computing device configured to perform the various functions described herein. Various embodiments of client computing devices may include, without limitation, smartphones, tablets, laptops, terminals, kiosks, personal computers, desktop computers, enterprise computers, or the like. Various embodiments of client computing devices may operate using different operating systems including, without limitation, IOS, ANDROID, WINDOWS, MACOS, LINUX, CHROME OS, or the like.

As used herein, the term "graphical user interface" refers to a representation of a software interface. For example, a graphical user interface may be the visual representation of a software such as a website, mobile application, desktop application, or the like, that may be used to generally interface with the software. By way of example, images, buttons, links, backgrounds, text fields, or the like, may be included within or make up a graphical user interface. In various examples, a graphical user interface may be configured for display on one or more screens (e.g., a screen of a mobile phone, a personal computer, or the like).

As used herein, the term "application programming interface" and "API" refers to a computing interface that defines indication inputs between applications, services, microservices, computing devices, repositories, or the like. An API may define formatting for one or more of a programming code call, request, function, procedure, notification, data object, data structure, or the like. Non-limiting examples of an application programming interface may include JavaScript Object Notation (JSON), Extensible Markup Language (XML), Simple Object Access Protocol (SOAP), Hypertext Markup Language (HTML), the like, or combinations thereof.

As used herein, the term "repository," "database," and similar terms may be used interchangeably to refer to a computing location associated with a system where data is stored, accessed, modified, and otherwise maintained by the system. A repository may be used to store data in association with a data storage protocol or a query language. In certain embodiments, a repository may embody a data storage device or devices, a separate database server or servers, or as a combination of data storage devices and separate database servers. Further, in some embodiments, a repository may be embodied as a distributed repository such that some of the stored data is stored centrally in a location within the repository and other data stored in a single remote location or a plurality of remote locations. Alternatively, in some embodiments, a repository may be distributed over a plurality of remote storage locations only such as in a cloud storage environment.

As used herein, the term "machine learning model" refers to one or more processes, algorithms, or other data entity that describes parameters, hyper-parameters, defined operations, or defined mappings of a model that is configured to process one or more inputs in accordance with one or more trained parameters of the machine learning models in order to generate a prediction. An example of a machine learning model is a mathematically derived algorithm (MDA). An MDA may comprise any algorithm trained using training data to predict one or more outcome variables. Without limitation, an MDA, as used herein, may comprise machine learning frameworks including neural networks, deep neural networks, generative adversarial networks, convolutional neural networks, recurrent neural networks, large language models, generative pre-trained transformers (GPT), support vector machines, gradient boosts, decision trees, random forests, Markov models, adaptive Bayesian techniques, and statistical models (e.g., timeseries-based forecast models such as autoregressive models, autoregressive moving average models, or an autoregressive integrating moving average models). Additionally, and without limitation, an MDA, as used in the singular, may include ensembles using multiple machine learning or statistical techniques.

As used herein, the term "generative artificial intelligence model," "generative AI model," and similar terms may be used interchangeably to refer to one or more artificial intelligence models, including but not limited to some example machine learning models, configured to generate new outputs in response to a prompt or other input data. A generative AI model may include a large language model such as, for example, a generative pre-trained transformer (GPT) model.

As used herein the term "prompt," "model prompt," or similar terms may be used interchangeably to refer to instructions or context provided to a generative AI model to guide the generative AI model's output generation. A prompt may serve as the starting point for interaction with the generative AI model, setting the stage for the type of output expected from the generative AI model. The prompt may be implemented as text that is sent to the generative AI model. For example, the prompt may be implemented as a string of text that is sent to the generative AI model via an API associated with the generative AI model.

### EXAMPLE SYSTEMS AND APPARATUSES

Various embodiments of the present disclosure may be implemented as methods, apparatus, systems, computing devices, computer program products, or the like. As such, embodiments of the present disclosure may take the form of an apparatus, system, computing device, computing entity, or the like executing instructions stored on a computer-readable storage medium to perform certain steps or operations. Thus, embodiments of the present disclosure may take the form of an entirely hardware embodiment, an entirely computer program product embodiment, or an embodiment that comprises a combination of computer program products and hardware performing certain steps or operations.

Embodiments of the present disclosure are described below with reference to block diagrams and flowchart illustrations. Thus, it should be understood that each block of the block diagrams and flowchart illustrations may be implemented in the form of a computer program product, an entirely hardware embodiment, a combination of hardware and computer program products, or apparatus, systems, computing devices, computing devices, or the like carrying out instructions, operations, steps, and similar words used interchangeably (e.g., the executable instructions, instructions for execution, program code, or the like) on a computer-readable storage medium for execution. For example, retrieval, loading, and execution of code may be performed sequentially such that one instruction is retrieved, loaded, and executed at a time. In some example embodiments, retrieval, loading, or execution may be performed in parallel such that multiple instructions are retrieved, loaded, or executed together. Thus, such embodiments may produce specifically configured machines performing the steps or operations specified in the block diagrams and flowchart illustrations. Accordingly, the block diagrams and flowchart illustrations support various combinations of embodiments for performing the specified instructions, operations, or steps.

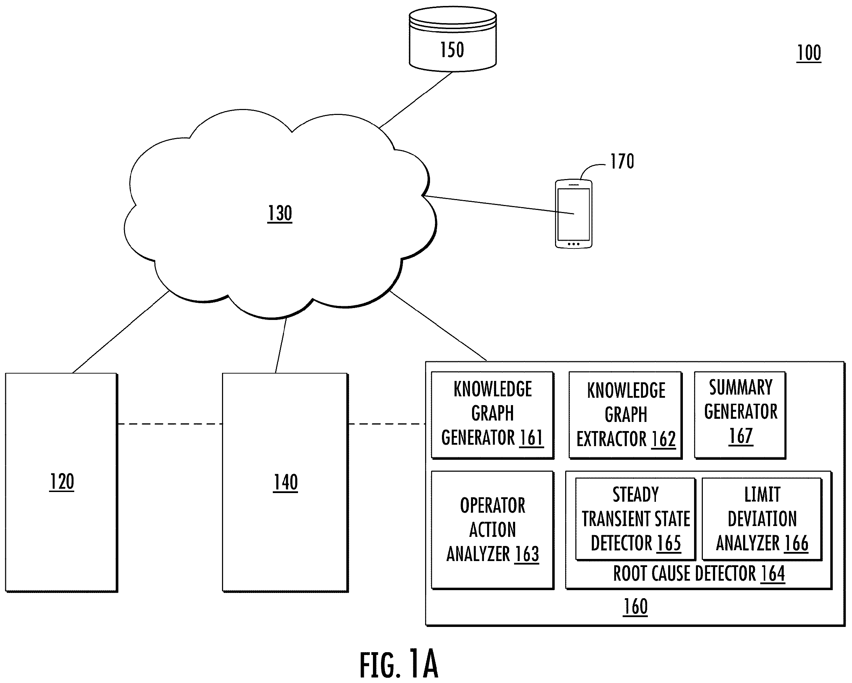

In this regard, FIG. 1A shows an example system environment 100 within which at least some embodiments of the present disclosure may operate. The depiction of the example system environment 100 is not intended to limit or otherwise confine the embodiments described and contemplated herein to any particular configuration of elements or systems, nor is it intended to exclude any alternative configurations or systems for the set of configurations and systems that can be used in connection with embodiments of the present disclosure. Rather, FIG. 1A and the system environment 100 disclosed therein is merely presented to provide an example basis and context for the facilitation of some of the features, aspects, and uses of the methods, apparatuses, computer readable media, and computer program products disclosed and contemplated herein.

As illustrated, the system environment 100 includes a process control and automation system 140 in communication with an abnormal condition management system 160. In some embodiments, the process control and automation system 140 comprises a control system such as a distributed control system (DCS). For example, in some embodiments, the process control and automation system 140 may implement a distributed control system. In some embodiments, the process control and automation system 140 communicates with the abnormal condition management system 160 over one or more communications network(s), for example a communications network 130. The communications network 130 in some embodiments is embodied in any of a myriad of network configurations. In some embodiments, the communications network 130 embodies a public network (e.g., the Internet). In some embodiments, the communications network 130 embodies a private network (e.g., an internal localized, or closed-off network between particular devices). In some other embodiments, the communications network 130 embodies a hybrid network (e.g., a network enabling internal communications between particular connected devices and external communications with other devices). The communications network 130 in some embodiments includes one or more base station(s), relay(s), router(s), switch(es), cell tower(s), communications cable(s) and/or associated routing station(s), and/or the like. In some embodiments, the communications network 130 includes one or more user-controlled computing device(s) (e.g., a user owned router and/or modem) and/or one or more external utility devices (e.g., Internet service provider communication tower(s) and/or other device(s)).

Each of the components of the system environment 100 may be communicatively coupled to transmit data to and/or receive data from one another over the same or different wireless and/or wired networks embodying the communications network 130. Such configuration(s) include, without limitation, a wired or wireless Personal Area Network (PAN), Local Area Network (LAN), Metropolitan Area Network (MAN), Wide Area Network (WAN), and/or the like. Additionally, while FIG. 1A illustrate certain system entities as separate, standalone entities communicating over the communications network 130, the various embodiments are not limited to this architecture. In other embodiments, one or more computing entities share one or more components, hardware, and/or the like, or otherwise are embodied by a single computing device such that connection(s) between the computing entities are over the communications network 130 are altered and/or rendered unnecessary. For example, in some embodiments, the process control and automation system 140 includes some or all of the abnormal condition management system 160, such that an external communications network 130 is not required.

In some embodiments, the process control and automation system 140 is associated with a plant 120. In some embodiments, the process control and automation system 140 and the abnormal condition management system 160 are embodied in an on-premises system within or associated with the plant 120. In some such embodiments, the process control and automation system 140 and the abnormal condition management system 160 may be communicatively coupled via at least one wired connection. Alternatively, or additionally, in some embodiments, the process control and automation system 140 embodies or includes the abnormal condition management system 160, for example as a software component of a single enterprise terminal. In some embodiments, the process control and automation system 140 comprises operational technology (OT) network configured for monitoring process units of the plant 120. The OT network, for example, may comprise one or more devices, applications, and/or systems configured for monitoring process units in the plant 120. In some embodiments, the OT network comprises a DCS configured to control and automate process units of the plant 120 and which distributes control functions thereof across multiple controllers associated with the plant 120. Alternatively, or additionally, in some embodiments, the OT network comprises one or more smart plant instrumentation (SPI) applications configured to manage and optimize design and operation of instrumentation systems, including generating and managing documentation, specification, and designs for instrumentation systems. The process control and automation system 140 (e.g., OT network thereof), for example, may include an instrumentation system that comprises one or more instruments (e.g., including field devices such as sensors, actuators, and/or the like) for monitoring and controlling various parameters of process units of the plant 120. Alternatively, or additionally, in some embodiments, the OT network comprises one or more design documents (e.g., engineering document such as piping and instrumentation diagrams (P&ID), process flow diagrams, and/or the like). Alternatively, or additionally, in some embodiments, the OT network comprises one or more advanced process control (APC) systems configured to optimize process operations. Alternatively, or additionally, in some embodiments, the OT network comprises one or more safety systems configured to monitor and manage safety-related functions within the plant. It will be appreciated that the OT network may comprise other applications and/or systems and/or may omit one or more of the examples provided herein.

The process control and automation system 140 includes any number of computing device(s), system(s), physical component(s), and/or the like. In some embodiments, at least a portion of the process control and automation system 140 includes any number of computing device(s), system(s), physical component(s), and/or the like that facilitates producing of any number of products, for example utilizing particular configurations that cause processing of particular inputs available within the process control and automation system 140. In some embodiments, the process control and automation system 140 includes one or more physical component(s), connection(s) between physical component(s), and/or computing system(s) that control operation of each physical component therein. Alternatively, or additionally, in some embodiments the process control and automation system 140 includes one or more computing system(s) that are specially configured to operate the physical component(s) in a manner that produces one or more particular product(s) simultaneously. In some embodiments, process control and automation system 140 includes one or more computing device(s) and/or system(s) embodied in hardware, software, firmware, and/or a combination thereof, that configure and/or otherwise control operation of one or more physical component(s) in the processing plant. For example, in some embodiments, such computing device(s) and/or system(s) include one or more programmable logic controller(s), MPC(s), application server(s), centralized control system(s), distributed control system(s), and/or the like, that control(s) configuration and/or operation of at least one physical component. In some embodiments, the process control and automation system 140 defines one or more hierarchical layers. In an example embodiment, the hierarchical layer comprises a regulatory layer, advanced process control (APC) layer and/or a plant wide optimizer (PWO) layer. The regulatory layer may comprise one or more instruments (e.g., sensors, actuators, or the like), one or more PID controllers (also referred to herein as PID assets), and/or other assets. The APC layer may comprise one or more APC controllers (also referred to herein as APC assets). The PWO layer may comprise one or more PWO controllers (also referred to herein as PWO assets). In various embodiments, the abnormal condition management system 160 is configured to monitor at least a portion of the assets (e.g., at least a portion of the instruments, PID controller(s), APC controller(s), and/or PWO controller(s)) embodied by or otherwise associated with process control and automation system 140. In some embodiments, the hierarchical layers of the process control and automation system may be implemented as a Purdue model (described further below). It will be appreciated that different process control and automation system 140 may include different physical component(s), computing system(s), and/or the like.

In some embodiments, for example, the plant 120 may be any type of plant associated with the environment 100. In this regard, the plant 120 may, for example, be a process plant (e.g., industrial plant) that receives and processes input ingredients to create a processed product, such as a hydrocarbon processing plant, a refinery, a pulp and paper plant, a chemical plant, an alumina plant, a drilling facility, a fracking field, and/or the like.

The plant 120 in some embodiments includes any number of individual physical processing units (e.g., also referred to herein as process units). The physical processing units of the plant 120 may perform a particular function during operation of the plant 120. For example, the physical processing units may include one or more well physical processing units, fracking physical processing units, crude processing physical processing units (e.g., crude processing physical processing units having a vacuum section), hydrotreating physical processing units, isomerization physical processing units, reforming physical processing units, vapor recovery physical processing units, fluid catalytic cracking physical processing units, batch blending physical processing units, rundown blending physical processing units, hydrocracking physical processing units, alkylation physical processing units, dewaxing physical processing units, deasphalter physical processing units (e.g., propane deasphalter physical processing units), aromatics reduction physical processing units, delayed cooker physical processing units, visbreaker physical processing units, digester physical processing units, thermomechanical grinding physical processing units, bleaching physical processing units, blender physical processing units, pump physical processing units, flash venting physical processing units, compressor physical processing units, cooler physical processing units (e.g., air cooler physical processing units), sensor physical processing units, flare physical processing units, heating, ventilation, and air (HVAC) physical processing units, lighting physical processing units, and/or the like that perform a particular operation for transforming, separating, reacting, reforming, digesting, bleaching, storing, releasing, and/or otherwise handling one or more input ingredients, intermediate ingredients, and/or processed products (e.g., hydrocarbons, gases, etc.). In this regard, for example, the individual physical processing units of the plant 120 may include physical processing units associated with a particular process performed by the plant 120.

The plant 120 in some embodiments includes any number of individual physical streams. The physical streams of the plant 120 may perform a particular function during operation of the plant 120. For example, the physical streams may include one or more liquefied petroleum gas physical streams, straight-run gasoline physical streams, naphtha physical streams, middle distillates physical streams, crude physical streams, heavy atmospheric gasoil physical streams, vacuum gasoil physical streams, lube base stocks physical streams, fuel gas physical streams, light gasoil physical streams, gasoline physical streams, fractionator bottoms physical streams, fuel oil physical streams, asphalt physical streams, refinery fuel physical streams, regular gasoline physical streams, solvents physical streams, aviation fuel physical streams, diesel physical streams, heating oil physical streams, lube oil physical streams, grease physical streams, industrial fuel physical streams, wood chip physical streams, brown stock physical streams, white liquor physical streams, bleached pulp physical streams, and/or the like that perform a particular operation for transforming, storing, releasing, transporting, and/or otherwise handling one or more input ingredients, intermediate ingredients, and/or processed products (e.g., hydrocarbons, gases, etc.). In this regard, for example, the individual physical streams of the plant 120 may include physical streams associated with a particular process performed by the plant 120.

The plant 120 in some embodiments includes any number of individual physical storage units. The physical storage units may perform a particular function during operation of the plant 120. For example, the physical storage units may include one or more input physical storage units, intermediate physical storage units, component physical storage units, processed product physical storage units, and/or the like that perform a particular operation for transforming, storing, releasing, transporting, and/or otherwise handling one or more input ingredients, intermediate ingredients, and/or processed products (e.g., hydrocarbons, gases, etc.). In this regard, for example, the individual physical streams of the plant 120 may include physical storage units associated with a particular process performed by the plant 120.

In some embodiments, each individual physical processing unit, each individual physical storage unit, and/or each individual physical stream of the plant 120 is associated with a determinable location. The determinable location of a particular physical processing unit, physical storage unit, and/or physical stream in some embodiments represents an absolute position (e.g., GPS coordinates, latitude, and longitude locations, and/or the like) or a relative position (e.g., a point representation of the location of a physical processing unit, physical storage unit, and/or physical stream from a local origin point corresponding to the plant 120). In some embodiments, a physical processing unit, physical storage unit, and/or physical stream includes or otherwise is associated with a location sensor and/or software-driven location services that provide the location data representing the location corresponding to that physical processing unit, physical storage unit, and/or physical stream. In other embodiments the location of a physical processing unit, physical storage unit, and/or physical stream is stored and/or otherwise predetermined within a software environment, provided by a user and/or otherwise determinable to one or more systems.

Additionally, or alternatively, in some embodiments, the plant 120 itself is associated with a determinable location. The determinable location of the plant 120 in some embodiments represents an absolute position (e.g., GPS coordinates, latitude and longitude locations, an address, and/or the like) or a relative position of the plant 120 (e.g., an identifier representing the location of the plant 120 as compared to one or more other plants, one or more other buildings, an enterprise headquarters, or general description in the world for example based at least in part on continent, state, or other definable region). In some embodiments, the plant 120 includes or otherwise is associated with a location sensor and/or software-driven location services that provide the location data corresponding to the plant 120. In other embodiments, the location of the plant 120 is stored and/or otherwise determinable to one or more systems.

The system environment 100 may include one or more databases 150. The one or more databases 150 may be configured to receive, store, and/or transmit data. In some embodiments, the one or more databases 150 may be associated with data associated with the plant 120. In some embodiments, the data may be received from the plant 120. In this regard, for example, the plant 120 may have one or more sensors that capture data and/or one or more datastores that store data. In some embodiments, the data may be received from the process control and automation system 140. The one or more user devices 170 may be associated with users of the process control and automation system 140, such as operators (e.g., console operators) associated with one or more process units in the plant 120.

In some embodiments, the abnormal condition management system 160 is configured via hardware, software, and/or firmware to identify root cause(s) of abnormal process conditions (e.g., process alarms) and generate guidance for abnormal conditions (e.g., process alarms). In some embodiments, the guidance comprises one or more summaries and/or set of corrective actions for handling an abnormal condition. In some embodiments, the abnormal condition management system 160 is configured to automatically provide the set of corrective actions and/or summaries for display on a user device in response to subsequent occurrence of an abnormal condition. In some embodiments, the abnormal condition management system 160 is configured to predict future occurrence of an abnormal condition. In some embodiments, the system 160 includes a knowledge graph generator 161, a knowledge graph extractor 162, an operator action analyzer 163, a root cause detector 164, and/or a summary generator 167 configured to perform various functions associated with the system 160.

In some embodiments, the knowledge graph generator 161 comprises hardware, software, and/or firmware configured to generate a knowledge graph as described herein. In some embodiments, the knowledge graph generator 161 is configured to ingest data (e.g., plant data) from one or more data sources and generate the knowledge graph using the ingested data. As described further herein, in some embodiments, the one or more data sources comprise applications and/or systems associated with an OT network associated with the plant 120, including DCS system(s), historical data management system(s), health monitoring system(s), design document system(s), and/or other OT network systems. In some embodiments, the knowledge graph generator 161 comprises and leverages a secure agentic system (e.g., AI system comprising one or more artificial intelligence (AI) agents) configured to autonomously detect the applications and systems. In some embodiments, the secure agentic system (e.g., one or more AI agents thereof) may comprise one or more generative AI models. In some embodiments, the knowledge graph generator 161 is configured to detect if there is conflict within data obtained from the one or more data sources, and resolve the detected conflict.

In some embodiments, the knowledge graph extractor 162 comprises hardware, software, and/or firmware configured to generate operator action data (e.g., comprising historical operator actions) for an abnormal condition using the knowledge graph extractor. For example, the knowledge graph extractor 162 may be configured to extract operator actions (e.g., historical operator actions) associated with an abnormal condition from the knowledge graph generated by the knowledge graph generator 161.

In some embodiments, the operator action analyzer 163 comprises hardware, software, and/or firmware configured to generate a set of corrective actions for an abnormal condition using operator action data generated by the knowledge graph extractor 162. For example, the set of corrective actions may comprise one or more operator actions identified and selected from the operator action data has optimal operator actions to resolve the abnormal condition. In some embodiments, the operator action analyzer 163 comprises and/or leverages one or more machine learning models and/or generative models configured to analyze the operator action data to generate the set of corrective actions. In some embodiments, the one or more machine learning models comprise an ensemble machine learning model. In some embodiments, the one or more generative AI models comprise pre-trained language models (e.g., GPT or the like). In some embodiments, the operator action analyzer 163 is configured to predict future occurrence of abnormal conditions, for example, by automatically tracking root causes. In some embodiments, the operator action analyzer 163 may leverage the transient state detection approach and one or more machine learning methods to predict potential root causes and future abnormal conditions. For example, in some embodiments, the operator action analyzer 163 may be configured to analyze historical patterns of transient states and process deviations that preceded past abnormal conditions, and apply machine learning models trained on such historical patterns to predict potential root causes and/or future occurrence of abnormal conditions. In some embodiments, the predictive capabilities may enable proactive identification of conditions that may lead to abnormal conditions, thereby facilitating preventive actions by operators before an abnormal condition occurs.

In some embodiments, the root cause detector 164 comprise hardware, software, and/or firmware configured to determine the root cause(s) of an abnormal condition using the knowledge graph generated by the knowledge graph generator 161. In some embodiments, the root cause detector 164 may leverage other data along with the knowledge graph to generate the root cause(s). In some embodiments, the root cause detector 164 may generate the root cause for an abnormal condition using a hybrid approach as described further herein. In some embodiments, the root cause detector includes and/or leverages a steady transient state detector 165 and/or a limit deviation analyzer 166, each configured via hardware, software, and/or firmware to perform and/or facilitate one or more operations/steps of root cause detection process, as described herein. In some embodiments, the root cause detector 164 may be configured to generate a root cause prediction for abnormal conditions. In some embodiments, the root cause detector 164 may be configured to generate a root cause prediction for abnormal conditions. In some embodiments, the predictive capabilities may leverage advanced warning techniques for transient state detection, such as those described in related patent applications. In some embodiments, the root cause detector 164 may leverage the transient state detection approach and one or more machine learning methods to predict potential root causes and future abnormal conditions. For example, in some embodiments, the root cause detector 164 may be configured to analyze historical patterns of transient states and process deviations that preceded past abnormal conditions, and apply machine learning models trained on such historical patterns to predict potential root causes and/or future occurrence of abnormal conditions. In some embodiments, the predictive capabilities may enable proactive identification of conditions that may lead to abnormal conditions, thereby facilitating preventive actions by operators before an abnormal condition occurs.

In some embodiments, the summary generator 167 comprises hardware, software, and/or firmware configured to generate one or more summaries for an abnormal condition. In some embodiments, the summary generator 167 comprises and/or uses one or more generative AI models to generate the one or more summaries and based on the operator actions extracted from the knowledge graph for the abnormal condition, the set of corrective actions generated for the abnormal condition, and/or root cause identified for the abnormal condition.

In some embodiments, the system 160 includes a feedback mechanism for receiving user input. In some embodiments, the feedback mechanism provides for review, editing, and/or approval of the operator actions data, set of corrective actions and/or summaries. In some embodiments, the feedback mechanism comprises one or more graphical user interfaces configured for being rendered on a use device 170 and to receive input from the user associated with the user device 170. In some embodiments, the system 160 is configured to automatically provide the operator action data, set of operator actions, and/or the one or more summaries for display on a user device 170 in response to subsequent occurrence of the abnormal condition (e.g., in response to re-occurrence of the same type of abnormal condition).

Additionally, while FIG. 1A illustrates certain components as separate, standalone entities communicating over the network 130, various embodiments are not limited to this configuration. In other embodiments, one or more components may be directly connected and/or share hardware or the like. For example, in some embodiments, the process control and automation system 140 or the abnormal condition management system 160 may include the one or more databases 150, which may collectively be located in or at the plant 120.

It will be understood that while many of the aspects and elements presented in FIG. 1A are shown as discrete, separate elements, other configurations may be used in connection with the methods, apparatuses, computer readable media, and computer programs described herein, including configurations that combine, omit, separate, or add aspects or elements. The various functions of the system environment 100 may be performed by other arrangements of one or more computing devices or computing systems without departing from the scope of the present disclosure. For example, in some embodiments, the functions of one or more of the illustrated elements in FIG. 1A may be performed by a single computing device or by multiple computing devices, which devices may be local or cloud based.

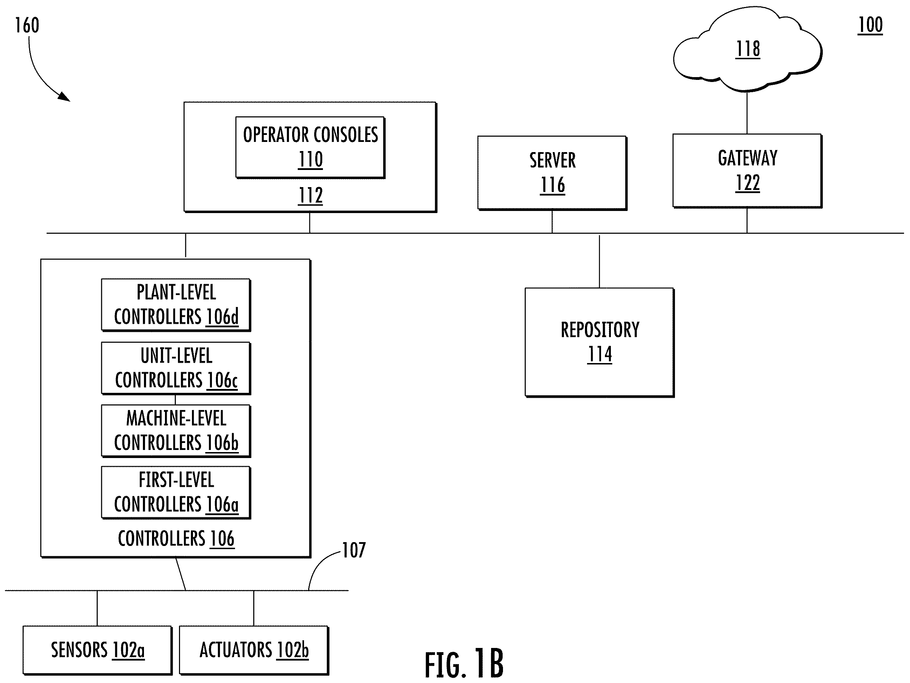

FIG. 1B illustrates a block diagram of an example process control and automation system 140 in accordance with at least one example embodiment of the present disclosure. The depiction of the example process control and automation system 140 is not intended to limit or otherwise confine the embodiments described and contemplated herein to any particular configuration of elements or systems, nor is it intended to exclude any alternative configurations or systems for the set of configurations and systems that can be used in connection with embodiments of the present disclosure. Rather, FIG. 1B disclosed therein is merely presented to provide an example basis and context for the facilitation of some of the features, aspects, and uses of the methods, apparatuses, computer readable media, and computer program products disclosed and contemplated herein. It will be understood that while many of the aspects and components presented in FIG. 1B are shown as discrete, separate elements, other configurations may be used in connection with the methods, apparatuses, computer readable media, and computer programs described herein, including configurations that combine, omit, separate, and/or add aspects and/or components.

As shown in FIG. 1B, the example process control and automation system 140 includes various components that facilitate production or processing of at least one product or other material. For instance, the process control and automation system 140 can be used to facilitate control over components in one or more process plants (e.g., industrial plants such as oil refineries and/or the like). Each plant 120 may represent one or more processing facilities (or one or more portions thereof), such as one or more manufacturing facilities for producing at least one product or other material. In some examples, each plant may implement one or more industrial processes and may, individually or collectively, be referred to as a process system. A process system generally represents any system or portion thereof configured to process one or more products or other materials.

In FIG. 1B, the example process control and automation system 140 may include one or more sensors 102a and/or one or more actuators 102b. The sensors 102a and actuators 102b represent components in a process system that may perform any of a wide variety of functions. For example, the sensors 102a could measure a wide variety of characteristics in the process system, such as flow, pressure, or temperature. Also, the actuators 102b could alter a wide variety of characteristics in the process system, such as, for example, valve openings. Each of the sensors 102a includes any suitable structure for measuring one or more characteristics in a process system. Each of the actuators 102b includes any suitable structure for operating on or affecting one or more conditions in a process system.

At least one network 107 is coupled to the sensors 102a and actuators 102b. The network 107 facilitates interaction with the sensors 102a and actuators 102b. For example, the network 107 could transport measurement data from the sensors 102a and provide control signals to the actuators 102b. The network 107 could represent any suitable network or combination of networks. In an example embodiment, the communications network 107 includes an ethernet network, electrical signal network, pneumatic control signal network, and/or the like. In some embodiments, the network 107 may include, without limitation, a wired or wireless Personal Area Network (PAN), Local Area Network (LAN), Metropolitan Area Network (MAN), Wide Area Network (WAN), and/or the like.

The example process control and automation system 140 may include various controllers 106. The controllers 106 may be used in the example process control and automation system 140 to perform various functions in order to control one or more industrial processes. For example, a first set of controllers 106a may use measurements from one or more sensors 102a to control the operations of one or more actuators 102b. A second set of controllers 106b may be used to optimize the control logic or other operations performed by the first set of controllers. A third set of controllers 106c could be used to perform additional functions. Each controller 106 includes any suitable structure for controlling one or more aspects of a process/unit or group of processes/units associated with one or more plants. In some embodiments, at least some of the controllers 106 may, for example, represent proportional-integral-derivative (PID) controllers or multivariable controllers, such as controllers implementing model predictive control (MPC) or other advanced predictive control (APC). In an example embodiment, each controller 106 may represent a computing device running a real-time operating system, a WINDOWS operating system, or the like.

Operator access to and interaction with the controllers 106 and other components of the process control and automation system 140 may occur via one or more operator consoles 110. An operator console 110 may comprise computing or communication devices. Each operator console 110 may be used to provide information to an operator and/or receive information from an operator. For example, each operator console 110 may provide information identifying a current state of industrial process to the operator, such as values of various process variables and warnings, alarms, or other states associated with the industrial process. Each operator console 110 may also receive information affecting how the process (e.g., industrial process) is controlled, such as by receiving setpoints or control modes for process variables controlled by the controllers 106 or other information that alters or affects how the controllers 106 control the industrial process. Each operator console 110 includes any suitable structure for displaying information to and interacting with an operator. For example, each operator console 110 may represent a computing device running a WINDOWS operating system or other operating system.

Multiple operator consoles 110 may be grouped together and used in one or more control rooms 112. Each control room 112 may include any number of operator consoles 110 in any suitable arrangement. In some embodiments, multiple control rooms 112 may be used to control an industrial plant, such as when each control room 112 includes operator consoles 110 used to manage a discrete part of the industrial plant.

Each server 116 may comprise a computing device that executes applications for users of the operator consoles 110 or other applications. The applications may be used to support various functions for the operator consoles 110, the controllers 106, or other components of the process control and automation system 140. Each server 116 may represent a computing device running a WINDOWS operating system or other operating system. It will be appreciated that while shown as being local within the process control and automation system 140, the functionality of the server 116 may be remote from the process control and automation system 140. For instance, the functionality of server 116 may be implemented in a computing cloud 118 or a remote server communicatively coupled to the process control and automation system 140 (e.g., via a gateway 122 or the like)

The process control and automation system 140 may include a repository 114 and/or one or more servers 116. The repository 114 may be configured to stored various information about the process control and automation system 140. The repository 114, for example, may store information that is generated by the various controllers 106 during the control of one or more industrial processes. The repository 114 includes any suitable structure for storing and facilitating retrieval of information. Although illustrated as a single component in FIG. 1B, the repository 114 may be located elsewhere in the process control and automation system 140, or multiple repositories may be distributed in different locations in the process control and automation system 140.

In some embodiments, the controllers 106 may be associated with a hierarchical architecture, where a given controller is associated with a particular level in the hierarchical architecture. For example, in some embodiments, the process control and automation system 140 may be implemented using a Purdue model of process control, where the controllers 106 may be associated with a hierarchical architecture/structure. In the Purdue model, "Level 0" may include the one or more sensors 102a and the one or more actuators 102b. In the Purdue model, "Level 1" may include one or more first-level controllers 106a configured to use the measurements from one or more sensors 102a to control the operations of one or more actuators 102b. For example, the one or more first-level controllers 106a may be configured to receive measurement data from one or more sensors 102a and use the measurement data to generate control signals for one or more actuators 102b. The first-level controllers 106a and the one or more sensors 102a and/or one or more actuators may be communicatively coupled via a via network.

In the Purdue model, "Level 2" may include one or more machine-level controllers 106b. The machine-level controllers 106b may perform various functions to support the operation and control of the first-level controllers 106a, sensors 102a, and actuators 102b, which could be associated with a particular piece of industrial equipment (such as a boiler or other machine). For example, the machine-level controllers 106b may log information collected or generated by the first-level controllers 106a, such as measurement data from the sensors 102a or control signals for the actuators 102b. The machine-level controllers 106b could also execute applications that control the operation of the first-level controllers 106a, thereby controlling the operation of the actuators 102b. Alternatively or additionally, the machine-level controllers 106b could provide secure access to the controllers 106b. The one or more machine-level controllers 106b may be communicatively coupled to the first-level controllers 106a, the sensors 102a, and/or the actuators 102b. Each of the machine-level controllers 106b includes any suitable structure for providing access to, control of, or operations related to a machine or other individual piece of equipment. Each of the machine-level controllers 106b may, for example, represent a server computing device running an operating system. Although not shown, different machine-level controllers 106b may be used to control different pieces of equipment in a process system (where each piece of equipment is associated with one or more first-level controllers 106a, sensors 102a, and actuators 102b).

In the Purdue model, "Level 3" may include one or more unit-level controllers 106c. Each unit-level controller 106c may be associated with a unit (e.g., process unit) in a process system, which represents a collection of different machines operating together to implement at least part of a process. The unit-level controllers 106c may be configured to perform various functions to support the operation and control of components in the lower levels. For example, the unit-level controllers 106c may log information collected or generated by the components in the lower levels, execute applications that control the components in the lower levels, and provide secure access to the components in the lower levels. Each of the unit-level controllers 106c includes any suitable structure for providing access to, control of or operations related to one or more machines or other pieces of equipment in a process unit. Each of the unit-level controllers 106c may, for example, represent a server computing device running an operating system. Different unit-level controllers 106c may be used to control different units in a process system (where each unit is associated with one or more machine-level controllers 106b, first-level controllers 106a, sensors 102a, and/or actuators 102b).

In the Purdue model, "Level 4" may include one or more plant-level controllers 106d. Each plant-level controller 106d may be associated with one or more process plants, which may include one or more process units that implement the same, similar, or different processes. The plant-level controllers 106d perform various functions to support the operation and control of components in the lower levels. For example, the plant-level controllers 106d may be configured to execute one or more manufacturing execution system (MES) applications, scheduling applications, or other additional plant or process control applications. Each of the plant-level controllers 106d includes any suitable structure for providing access to, control of or operations related to one or more process units in a process plant. Each of the plant-level controllers 106d may, for example, represent a server computing device running a MICROSOFT WINDOWS operating system. Access to the plant-level controllers 106d may be provided by one or more operator consoles.

In the Purdue model, "Level 5" may include one or more enterprise-level controllers (not shown). Each enterprise-level controller may be configured to perform planning operations for multiple process plants and to control various aspects of the plants. The enterprise-level controllers may also perform various functions to support the operation and control of component in the plants. As particular examples, the enterprise-level controller may be configured to execute one or more order processing applications, enterprise resource planning (ERP) applications, advanced planning and scheduling (APS) applications, or any other or additional enterprise control applications. Each of the enterprise-level controllers may include any suitable structure for providing access to, control of, or operations related to control of one or more process plants. Each of the enterprise-level controllers may, for example, represent a server computing device running an operating system. As used herein, the term enterprise may refer to an organization having one or more process plants or other processing facilities to be managed. It would be appreciated that if a single process plant is to be managed, the functionality of the enterprise-level controller may be incorporated into a plant-level controller 106d. Access to the enterprise-level controllers may be provided by one or more operator consoles. As described above, the operator console may include any suitable structure for supporting user access and control of one or more components in the process control and automation system 140.

Various levels of the Purdue model can include other components, such as one or more repositories. The repository(s) associated with each level could store any suitable information associated with that level or one or more other levels of the process control and automation system 140. A repository may, for example, store information used during production scheduling and optimization.

In some embodiments, the various controllers 106 and operator consoles in FIG. 1B may comprise computing devices. For example, each of the controllers 106 (106a-106d) may include one or more processing devices and/or one or more memories for storing instructions and data used, generated, or collected by the processing devices. Each of the controllers 106 may also include at least one network interface, such as one or more Ethernet interfaces or wireless transceivers. Also, each of the operator consoles may include at least one network interface, such as one or more Ethernet interfaces or wireless transceivers.

In some embodiments, at least one component of the process control and automation system 140 may be configured to support a mechanism (e.g., a system, apparatus, or the like) for root cause identification and guidance for abnormal conditions, as described herein. For example, the functionality may be implemented in an operator console 110, a server, or a computing cloud 118 or a remote server. In some embodiments, an asset represents any hardware, software, or other physical or virtual component within a process control and automation system, or an underlying industrial process being controlled. An asset may be associated with a single industrial site (or a portion thereof), multiple industrial sites (or portions thereof), or an enterprise. In some examples an asset may include a controller 106 (e.g., 106a-106d).

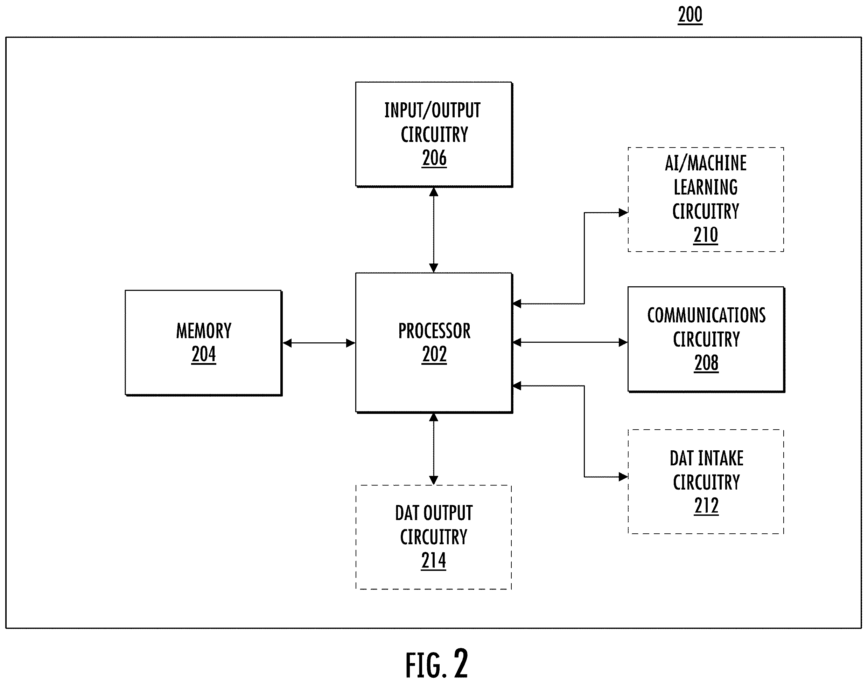

FIG. 2 illustrates an exemplary block diagram of an example apparatus that may be specially configured in accordance with an example embodiment of the present disclosure. Specifically, FIG. 2 depicts an example computing apparatus 200 ("apparatus 200") specially configured in accordance with at least some example embodiments of the present disclosure. For example, the computing apparatus 200 may be embodied as one or more of a specifically configured personal computing apparatus, a specifically configured cloud-based computing apparatus, a specifically configured embedded computing device (e.g., configured for edge computing, and/or the like). Examples of an apparatus 200 may include, but is not limited to, the abnormal condition management system 160, control and automation system 140, the one or more databases 150, and/or a user device 170. The apparatus 200 includes processor 202, memory 204, input/output circuitry 206, communications circuitry 208, optional artificial intelligence ("AI") and machine learning circuitry 210, optional data intake circuitry 212, and/or optional data output circuitry 214. In some embodiments, the apparatus 200 is configured to execute and perform the operations described herein.

Although components are described with respect to functional limitations, it should be understood that the particular implementations necessarily include the use of particular computing hardware. It should also be understood that in some embodiments certain of the components described herein include similar or common hardware. For example, in some embodiments two sets of circuitry both leverage use of the same processor(s), memory(ies), circuitry(ies), and/or the like to perform their associated functions such that duplicate hardware is not required for each set of circuitry.

In various embodiments, the computing apparatus 200 may refer to, for example, one or more computers, computing entities, desktop computers, mobile phones, tablets, phablets, notebooks, laptops, distributed systems, servers, or the like, and/or any combination of devices or entities adapted to perform the functions, operations, and/or processes described herein. Such functions, operations, and/or processes may include, for example, transmitting, receiving, operating on, processing, displaying, storing, determining, creating/generating, monitoring, evaluating, comparing, and/or similar terms used herein. In one embodiment, these functions, operations, and/or processes can be performed on data, content, information, and/or similar terms used herein. In this regard, the apparatus 200 embodies a particular, specially configured computing entity transformed to enable the specific operations described herein and provide the specific advantages associated therewith, as described herein.

Processor 202 or processor circuity 202 may be embodied in a number of different ways. In various embodiments, the use of the terms "processor" should be understood to include a single core processor, a multi-core processor, multiple processors internal to the apparatus 200, and/or one or more remote or "cloud" processor(s) external to the apparatus 200. In some example embodiments, processor 202 may include one or more processing devices configured to perform independently. Alternatively, or additionally, processor 202 may include one or more processor(s) configured in tandem via a bus to enable independent execution of operations, instructions, pipelining, and/or multithreading.

In an example embodiment, the processor 202 may be configured to execute instructions stored in the memory 204 or otherwise accessible to the processor. Alternatively, or additionally, the processor 202 may be configured to execute hard-coded functionality. As such, whether configured by hardware or software methods, or by a combination thereof, processor 202 may represent an entity (e.g., physically embodied in circuitry) capable of performing operations according to embodiments of the present disclosure while configured accordingly. Alternatively, or additionally, processor 202 may be embodied as an executor of software instructions, and the instructions may specifically configure the processor 202 to perform the various algorithms embodied in one or more operations described herein when such instructions are executed. In some embodiments, the processor 202 includes hardware, software, firmware, and/or a combination thereof that performs one or more operations described herein.

In some embodiments, the processor 202 (and/or co-processor or any other processing circuitry assisting or otherwise associated with the processor) is/are in communication with the memory 204 via a bus for passing information among components of the apparatus 200.

Memory 204 or memory circuitry 204 may be non-transitory and may include, for example, one or more volatile and/or non-volatile memories. In some embodiments, the memory 204 includes or embodies an electronic storage device (e.g., a computer readable storage medium). In some embodiments, the memory 204 is configured to store information, data, content, applications, instructions, or the like, for enabling an apparatus 200 to carry out various operations and/or functions in accordance with example embodiments of the present disclosure.

Input/output circuitry 206 may be included in the apparatus 200. In some embodiments, input/output circuitry 206 may provide output to the user and/or receive input from a user. The input/output circuitry 206 may be in communication with the processor 202 to provide such functionality. The input/output circuitry 206 may comprise one or more user interface(s). In some embodiments, a user interface may include a display that comprises the interface(s) rendered as a web user interface, an application user interface, a user device, a backend system, or the like. In some embodiments, the input/output circuitry 206 also includes a keyboard, a mouse, a joystick, a touch screen, touch areas, soft keys a microphone, a speaker, or other input/output mechanisms. The processor 202 and/or input/output circuitry 206 comprising the processor may be configured to control one or more operations and/or functions of one or more user interface elements through computer program instructions (e.g., software and/or firmware) stored on a memory accessible to the processor (e.g., memory 204, and/or the like). In some embodiments, the input/output circuitry 206 includes or utilizes a user-facing application to provide input/output functionality to a computing device and/or other display associated with a user.

Communications circuitry 208 may be included in the apparatus 200. The communications circuitry 208 may include any means such as a device or circuitry embodied in either hardware or a combination of hardware and software that is configured to receive and/or transmit data from/to a network and/or any other device, circuitry, or module in communication with the apparatus 200. In some embodiments the communications circuitry 208 includes, for example, a network interface for enabling communications with a wired or wireless communications network. Additionally, or alternatively, the communications circuitry 208 may include one or more network interface card(s), antenna(s), bus(es), switch(es), router(s), modem(s), and supporting hardware, firmware, and/or software, or any other device suitable for enabling communications via one or more communications network(s). In some embodiments, the communications circuitry 208 may include circuitry for interacting with an antenna(s) and/or other hardware or software to cause transmission of signals via the antenna(s) and/or to handle receipt of signals received via the antenna(s). In some embodiments, the communications circuitry 208 enables transmission to and/or receipt of data from a user device, one or more sensors, and/or other external computing device(s) in communication with the apparatus 200.

AI and machine learning circuitry 210 may be included in the apparatus 200. The AI and machine learning circuitry 210 may include hardware, software, firmware, and/or a combination thereof designed and/or configured to request, receive, process, generate, and transmit data, data structures, control signals, and electronic information for training and executing a trained AI and/or machine learning model configured for facilitating the operations and/or functionalities described herein. For example, in some embodiments the AI and machine learning circuitry 210 includes hardware, software, firmware, and/or a combination thereof, that identifies training data and/or utilizes such training data for training a particular machine learning model, AI, and/or other model to generate particular output data based at least in part on learnings from the training data. Additionally, or alternatively, in some embodiments, the AI and machine learning circuitry 210 includes hardware, software, firmware, and/or a combination thereof, that embodies or retrieves a trained machine learning model, AI and/or other specially configured model utilized to process inputted data and/or perform other functions described herein. Additionally, or alternatively, in some embodiments, the AI and machine learning circuitry 210 includes hardware, software, firmware, and/or a combination thereof that processes received data utilizing one or more algorithm(s), function(s), subroutine(s), and/or the like, in one or more pre-processing and/or subsequent operations that need not utilize a machine learning or AI model.

Data intake circuitry 212 may be included in the apparatus 200. The data intake circuitry 212 may include hardware, software, firmware, and/or a combination thereof, designed and/or configured to capture, receive, request, and/or otherwise gather data associated with operations of the plant 120. In some embodiments, the data intake circuitry 212 includes hardware, software, firmware, and/or a combination thereof, that communicates with one or more sensor(s) unit(s), and/or the like within the plant 120 to receive particular data associated with such operations of the plant 120. Additionally, or alternatively, in some embodiments, the data intake circuitry 212 includes hardware, software, firmware, and/or a combination thereof, that retrieves particular data associated with the plant 120 from one or more data repository/repositories accessible to the apparatus 200.

Data output circuitry 214 may be included in the apparatus 200. The data output circuitry 214 may include hardware, software, firmware, and/or a combination thereof, that configures and/or generates an output based at least in part on data processed by the apparatus 200. In some embodiments, the data output circuitry 214 includes hardware, software, firmware, and/or a combination thereof, that generates a particular report based at least in part on the processed data, for example where the report is generated based at least in part on a particular reporting protocol. Additionally, or alternatively, in some embodiments, the data output circuitry 214 includes hardware, software, firmware, and/or a combination thereof, that configures a particular output data object, output data file, and/or user interface for storing, transmitting, and/or displaying. For example, in some embodiments, the data output circuitry 214 generates and/or specially configures a particular data output for transmission to another system sub-system for further processing. Additionally, or alternatively, in some embodiments, the data output circuitry 214 includes hardware, software, firmware, and/or a combination thereof, that causes rendering of a specially configured user interface based at least in part on data received by and/or processing by the apparatus 200.

In some embodiments, two or more of the sets of circuitries 202-214 are combinable. Alternatively, or additionally, one or more of the sets of circuitry 202-214 perform some or all of the operations and/or functionality described herein as being associated with another circuitry. In some embodiments, two or more of the sets of circuitry 202-214 are combined into a single module embodied in hardware, software, firmware, and/or a combination thereof. For example, in some embodiments, one or more of the sets of circuitry, for example the AI and machine learning circuitry 210, may be combined with the processor 202, such that the processor 202 performs one or more of the operations described herein with respect to the AI and machine learning circuitry 210.

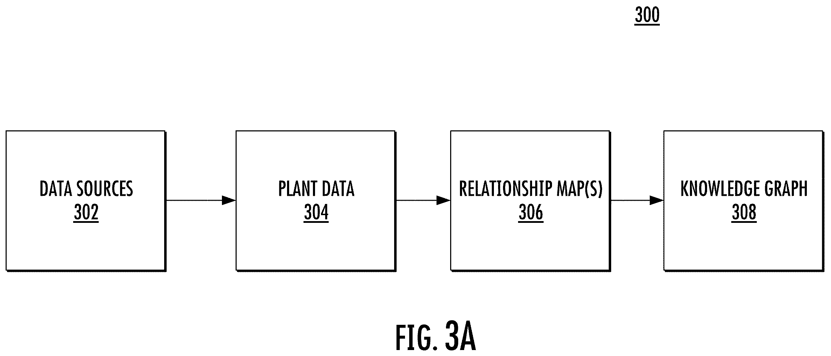

Referring to FIG. 3A, an example data flow 300 is provided in accordance with at least one example embodiment of the present disclosure. In some example embodiments, the data structures and processes shown and described with reference to the data flow diagram of FIG. 3A may be generated, performed, or otherwise facilitated by the various systems and apparatuses shown and described with reference to FIGS. 1A-1B and FIG. 2. Specifically, FIG. 3A represents an example data flow for generating a knowledge graph (e.g., distributed knowledge graph) in accordance with at least one example embodiment of the present disclosure.

In some embodiments, the system 160 obtains plant data 304 from one or more data sources 302. In some embodiments, the plant data 304 comprises data associated with a plant, such as plant 120. In some embodiments, the one or more data sources may be associated with a control and automation system 140. In some embodiments, the plant data 304 comprises design data, engineering configuration data and/or operations data. Alternatively, or additionally, in some embodiments, the plant data 304 comprises various data (e.g., design data, engineering configuration data, operations data, and/or other data) generated and/or maintained via application(s) and/or system(s) associated with an OT network associated with the plant 120. In some embodiments, obtaining the plant data 304 comprises detecting such application(s) and/or system(s) associated with the OT network, and accessing the various data generated and/or maintained via the detected application(s) and system(s). For example, in some embodiments, obtaining the plant data 304 comprises configuring the system 160 to detect application(s) and system(s) associated with an OT network of the plant 120 and to obtain various data (e.g., design data, engineering configuration data, operations data, and/or other data) from the detected application(s) and/or system(s). In some embodiments, an OT network comprises devices, controls, and/or an application network used in the plant 120 to facilitate control and automation of one or more process units in the plant, including DCS, asset management, historian, APC, safety systems, and/or other OT network systems.

In this regard, in some embodiments, the one or more data sources comprise DCS system(s), historical data management system(s), health monitoring system(s) (e.g., system health monitoring system that monitor and assess system performance and/or asset performance management system that monitors health performance, energy efficiency and integrity of assets, and/or other asset performance metrics), design document system(s), and/or other OT network systems. In some embodiments, a DCS, an historical data management system, a health monitoring system, a design document system, and/or other OT network systems may comprise one or more databases, records, documents, and/or or other data storage mechanisms that store various plant data (e.g., text data, image data, structured data, unstructured data, and/or other representations of design data, engineering configuration data and/or operations data) associated with the plant 120 (e.g., the process control and automation system 140 associated therewith).

In some embodiments, the system 160 obtains the plant data 304 from engineering configuration database(s), such as engineering repository database (ERDB) and/or enterprise model database that store asset models, tag information, operating limits, and/or the like; historical abnormal condition database(s) that store historical process alarms (e.g., past process alarms), historical system alarms (e.g., past system alarms), historical operator actions (e.g., past operator actions), and/or the like; instrumentation database(s), SPI applications that store DCS tag to P&ID mapping information, tag to equipment relationship information, and/or the like; design documents, such as P&ID and PFD, that comprise process flow information, equipment/instrument to equipment relationship information; log book(s) and shift log(s) that comprise record of historical events, historical incidents, and/or information or task between operating shifts; alarm objective analysis records that comprise alarm object analysis for alarm realization (e.g., to identify root cause, correction, impact, and/or consequence of an alarm); cause and effect correlation records that comprise correlation matrix for process variable to customer outputs during root cause analysis; control narrative database that comprise design and behavior of control strategies of a system or process; system health records that comprise system performance data; asset performance records that comprises asset performance data, and/or historian database that comprises process history (e.g., historical process information).

In this regard, in some embodiments, the plant data 304 may comprise asset models, tag information, operating limits, historical process alarms, historical system alarms, historical operator actions, DCS tag to P&ID mapping information, tag to equipment relationship information, process flow, equipment/instrument to equipment relationship information, historical events, historical incidents, information or task between operating shifts, alarm object analysis data, correlation matrix for process variables, design and behavior of control strategies of a system or process, system performance data, asset performance data, and/or historical process data (e.g., historical events, historical alarms, and historical process values). In some examples, a tag represents particular data (e.g., piece of data). Alternatively, or additionally, a tag comprises an identifier configured to uniquely identify a component or configuration associated with the tag.

In some embodiments, the system 160 includes and/or leverages a secure agentic system (e.g., comprising one or more AI agents) to autonomously detect the applications and systems. For example, the secure agentic system may be configured to autonomously scan and detect electronic devices connected to an OT network and identify data/information (including configuration) associated with the electronic devices. In some embodiments, the secure agentic system may comprise and/or leverage one or more generative AI models to process data (e.g., plant data 304) from detected nodes. For example, in some embodiments, one or more AI agents of the agentic system may be deployed on nodes for detecting and collecting the data. Such data processing by the agentic system may include, but not limited to, interpreting data from the detected nodes. In some embodiments, the plant data 304 may comprises structured data and/or unstructured data. In some embodiments, the agentic system is configured to process both structured data and unstructured data using the one or more generative AI models and based on one or more templates. In some embodiments, the one or more templates may define data extraction patterns, field mappings, and/or transformation rules for different data source types. In some embodiments, the combination of the one or more templates with the one or more generative AI models enables processing of both structured data (e.g., configuration databases, engineering records) and unstructured data (e.g., design documents, operational logs, manuals) from the detected nodes.

In some embodiments, the system 160 is configured to detect conflict within the plant data 304 and resolve the detected conflict. In some embodiments, such conflict may include differences between design configurations and operational setup. By way of example, the system 160 may be configured to detect if there a is conflict (e.g., differences) between process flow data (e.g., process flow relationships across assets) obtained from a DCS and process flow data obtained from a design document (e.g., P&ID, PFD, and/or the like) and resolve the detected conflict. In some embodiments, the system 160 may provide one or more options to automatically resolve detected conflicts. For example, in some embodiments, the system 160 may prioritize operational data from DCS over design documents when the operational data is more recent. Alternatively, or additionally, in some embodiments, the system 160 may flag discrepancies for user review and selection, enabling a user to select which data source should be used for a knowledge graph such as knowledge graph 308 described below. In some embodiments, the system 160 may apply predefined resolution rules based on data source hierarchy, data recency, or other configurable criteria. In some embodiments, the system 160 may generate recommendations for configuration updates to align design documents with operational setup, or vice versa. In some embodiments, the system 160 may automatically update the knowledge graph based on the resolved conflicts and may maintain an audit trail of conflict resolutions for traceability.

In some embodiments, the system 160 generates a knowledge graph 308 (e.g., distributed knowledge graph 308) based on the plant data 304. For example, the system 160 may generate a knowledge graph 308 using configuration data obtained from DCS, configuration data (e.g., including process flow data) obtained from design documents such as P&ID and/or PFD, and/or other configuration data obtained from other OT network systems to generate the knowledge graph 308.

In some embodiments, generating the knowledge graph 308 comprises digitizing plant processes and system documents such as standard operating procedures (SOPs) for safety and operations, OEM manuals, and/or the like, and generating the knowledge graph 308 based on the digitized information. In some embodiments, the digitized information may follow industrial standards such as, for example, CHIFOS, DEXPI, or ISA95.

In some embodiments, generating the knowledge graph 308 based on the plant data 304 comprises generating one or more relationship maps 306 representative and/or indicative of relationships (e.g., including direct or indirection dependency relationships) and connections among various components of the plant 120 and across various data sources (e.g., various applications and systems associated with the OT network associated with the plant 120) using the plant data 304 obtained from the various data sources, and assembling the knowledge graph 308 based on the one or more relationship maps 306.

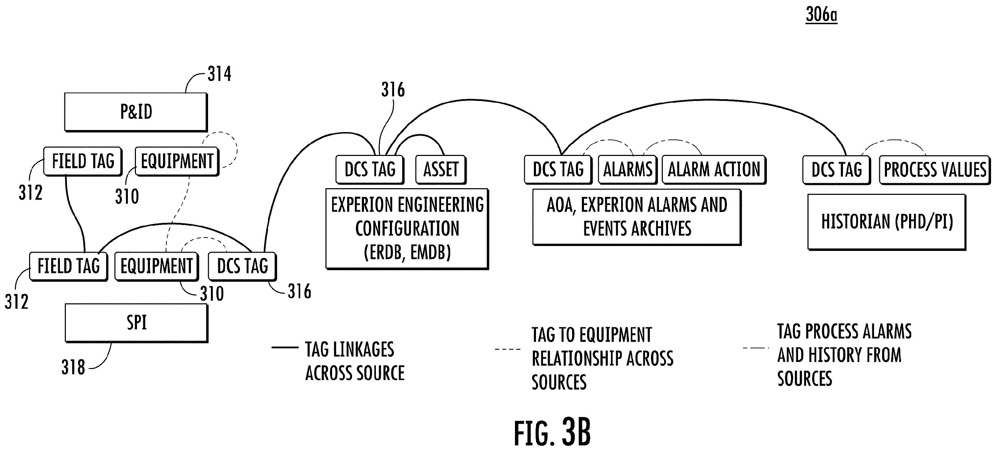

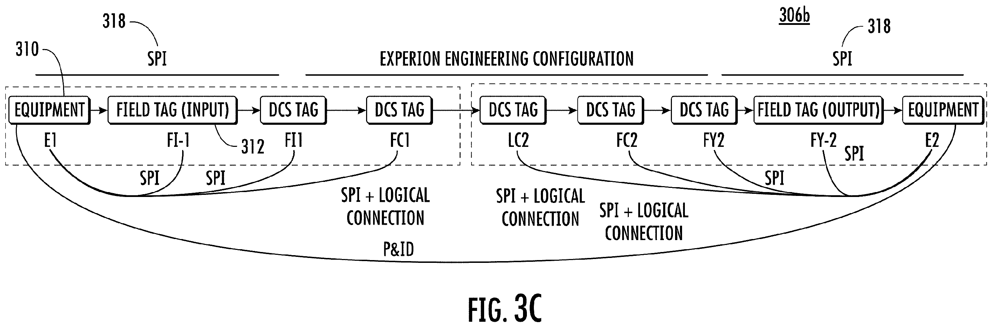

For example, in some embodiments, the system 160 detects and maps relationships between configurations, equipment, instruments, applications, and systems associated with the plant 120 (e.g., OT network thereof) as shown in FIGS. 3B-3C. Specifically, FIGS. 3B-3C provide visualizations of operational examples of relationship maps 306a and 306b in accordance with at least some embodiments of the present disclosure. As shown in FIG. 3A, the system 160 detects and maps tag linkages within a data source and/or across data sources; detects and maps tag to equipment relationship across data sources, and/or detects and maps alarm to operator actions/alarm actions and process values. As shown in FIGS. 3B-3C, the system 160 may map equipment 310 and instrument tag 312 (e.g., field tag) from a design document 314 (e.g., a first data source) to DCS tags 316 (which may be deployed and operational) in a SPI 318 (e.g., second data source) and other OT network systems. In some examples, the SPI 318 may include the context of DCS tags and DCS tags may be internally connected with logical relationships as shown in FIG. 3C. In such some embodiments, the system 160 may detect and map alarm tags based on the context of DCS tags in the SPI and the logical relationship/connection of DCS tags in the DCS configuration. By mapping design information to operation system information, such as DCS, to generate a knowledge graph 308 as described herein, example embodiments of the present disclosure provide for accurate representation of relationships (e.g., including control and process relationships) between the edges and nodes in the knowledge graph 308 along with incorporating control and flow.

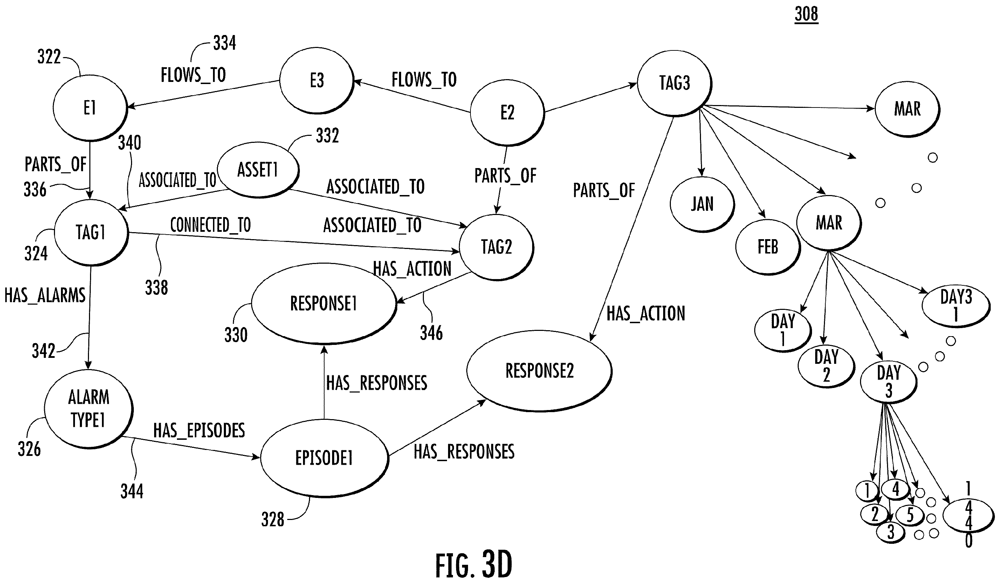

FIG. 3D provides an operational example of a knowledge graph 308 in accordance with at least some embodiments of the present disclosure. The knowledge graph 308 may include a plantwide configuration mapping between application and system configurations that enables proactive configuration change management and notifications on the impact of configuration changes. For example, in some embodiments, the knowledge graph 308 comprise a graphical representation of control, process, and operational relationships. As shown in FIG. 3D, the knowledge graph 308 may comprise a plurality of nodes and a plurality of edges. In some embodiments, the plurality of nodes may include one or more equipment nodes 322, one or more tag nodes 324, one or more alarm type nodes 326, one or more episode nodes 328 (also referred to herein in some embodiments as alarm event nodes), and/or one or more response nodes 330 (also referred to herein in some embodiments as operator action nodes).

An equipment node 322 may represent an equipment in the plant 120 and may comprise an equipment identifier (e.g., equipment name and/or other identifier of the equipment). In some embodiments, the equipment and/or equipment identifier represented by an equipment node 322 may be identified from equipment data obtained from SPI. A tag node 324 may represent an instrument or logical tag. In some embodiments, a tag is representative and/or indicative of a data points and corresponding value. For example, a tag may represent an operation parameter and its corresponding value. In some embodiments, a tag (e.g., instrument tag or logical tag) represented by a tag node may be identified from configuration data obtained from DCS. For example, the one or more tag nodes 324 may represent DCS tag(s).

An alarm type node 326 may represent an alarm type (e.g., a type of alarm configured such as high alarm, low alarm, or the like). In some embodiments, an alarm type represented by an alarm type node 326 may be identified from configuration data obtained from DCS. An episode node 328 may represent an alarm event (e.g., alarm instance, alarm episode, or similar terms) and may include metadata such alarm episode start time, alarm episode end time, and/or other metadata associated with an alarm event/episode. In some embodiments, an alarm event/episode represented by an episode node 328 may be identified from historical alarm and event data obtained from DCS. A response node 330 may represent an operator action (e.g., historical operator action taken to resolve an alarm) and may include data indicative of changes to a parameter value such as for example a change to an operational parameter from 5% to 10%). In some embodiments, a response represented by a response node 330 may be identified from historical alarm and event data obtained from DCS. An asset node 332 may represent an asset in the plant 120.

In some embodiments, the plurality of edges may include one or more equipment flow edges 334, one or more tag flow edges 336, one or more connection edges 338, one or more association edges 340, one or more alarm edges 342, one or more episode edges 344, and/or one or more action edges 346. An equipment flow edge 334 may represent equipment to equipment flow relationship. In some embodiments, such equipment to equipment flow relationship may be determined based on data from P&ID. A tag flow edge 336 may represent tag to equipment flow relationship (e.g., relation of a tag to an equipment). In some embodiments, such tag to equipment relationship may be determined based on configuration data obtained from SPI and/or DCS. A connection edge 338 may represent logical connection of operational parameter values from tag to tag (e.g., loop flow having an input tag, logical tag, and output tag). In some embodiments, such logical connection may be determined based on configuration data from DCS. An association edge 340 may represent the association of a tag to an asset. An alarm edge 342 may represent the alarm configured for a tag. In some embodiments such alarm configuration for a tag may be determined based on configuration data obtained from DCS. An episode edge 344 may represent an alarm event/alarm episode (e.g., instance of an alarm) for a particular alarm type. In some embodiments such alarm episode/event may be determined based on configuration data, historical alarm data, and/or historical event data obtained from DCS. An action edge 346 may represent an action taken by a tag during an alarm episode (e.g., within a time interval associated with an alarm episode). In some embodiments, such action may be determined based on configuration data, alarm data, and/or event data obtained from DCS.

In some embodiments, generating the knowledge graph 308 comprises identifying equipment associated with the plant from, for example, SPI and generating equipment node(s) corresponding to the equipment. In some embodiments, generating the knowledge graph 308 further comprises determining equipment to equipment flow relationship(s) from, for example, P&ID (e.g., P&ID Json outputs) and generating equipment flow edge(s) corresponding to the equipment to equipment flow relationship(s).In some embodiments, generating the knowledge graph 308 further comprises determining tag(s) from, for example, engineering configuration, and generating tag node(s) corresponding to the tag(s). In some embodiments, generating the knowledge graph 308 further comprises determining tag to equipment flow relationship(s) from, for example, derived output of SPI and/or engineering configuration and generating tag flow edge(s) corresponding to the tag to equipment flow relationship.

In some embodiments, generating the knowledge graph 308 further comprises determining alarm(s) configured from, for example, engineering configuration for each tag and generating alarm type node(s) corresponding to the alarm(s). In some embodiments, generating the knowledge graph 308 further comprises determining alarm episode(s) for each of one or more alarm types from, for example, historical alarm and event data and generating episode node(s) corresponding to the alarm episode(s) and comprising episode metadata (e.g., alarm episode start time and alarm episode end time). In some embodiments, generating the knowledge graph 308 further comprises determining historical operator action(s) during each of the alarm episode(s) from, for example, historical alarm and event data; generating response node(s) corresponding to the historical operator action(s); generating episode edge(s) by associating/linking the episode node(s) to the corresponding response node(s); and generating action edges(s) by associating/linking the episode node(s) to the corresponding response node(s). In some embodiments, generating the knowledge graph 308 further comprises determining process value trend values during each of the alarm episode(s) from, for example, historical alarms and events data and generating connection edges connecting tags and alarm edge(s) associating asset(s) to tags.

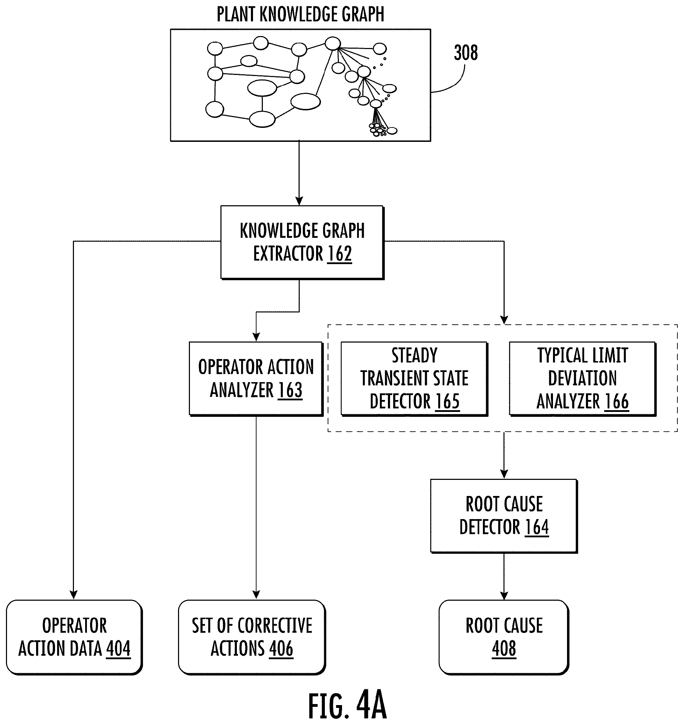

Referring to FIG. 4A, an example data flow 400 is provided in accordance with at least one example embodiment of the present disclosure. In some example embodiments, the data structures and processes shown and described with reference to the data flow diagram of FIG. 4A may be generated, performed, or otherwise facilitated by the various systems and apparatuses shown and described with reference to FIGS. 1A, 1B, and 2. Specifically, FIG. 4A represents an example data flow for operation action and root cause analysis in accordance with at least one example embodiment of the present disclosure.

In some embodiments, the system 160 (e.g., knowledge graph extractor 162 thereof) generates operator action data 404 for an abnormal condition (e.g., a particular abnormal condition type/alarm type) using a knowledge graph 308. For example, in some embodiments, the system 160 leverages the process, equipment, and instrument information in the knowledge graph 308 (e.g., including the logical connections and relationships represented in the knowledge graph) to generate operator action data 404 for an abnormal condition. In some embodiments, the abnormal condition may be detected based on an historical process data (e.g., historical events and process values). For example, the system 160 may analyze historical process data to identify an abnormal condition based at least in part on detecting one or more alarm episodes within the historical process data corresponding to the abnormal condition.

In some embodiments, the operator action data 404 comprise data representative and/or indicative of operator action(s) for each of a set of abnormal condition events and process value changes associated with the abnormal condition. An operator action may comprise an action by an operator during an abnormal condition to resolve the instance of the abnormal condition. In some embodiments, an operator action may encompass actions taken by an operator within a defined time interval before the abnormal condition (e.g., just before the abnormal condition). Examples of an abnormal condition include, but not limited to, process alarm, trips, and/or the like. For example, the operator action data 404 may comprise data representative and/or indicative of operator actions for each of a set of alarm events (e.g., alarm instances, alarm episodes, or similar terms) corresponding to a set of abnormal condition events.

In some embodiments, generating the operator action data 404 for the abnormal condition comprises analyzing abnormal condition (e.g., detected from historical process data) for operator actions during the abnormal condition and/or within a defined time interval before the abnormal condition, and identifying response nodes (e.g., corresponding to operator actions) within the knowledge graph 308 linked (e.g., having connections and/or relationships) to an alarm type node corresponding to the abnormal condition. For example, in some embodiments, generating the operator action data 404 for the abnormal condition comprises identifying the alarm type node in the knowledge graph 308 corresponding to the abnormal condition; identifying a set of episode nodes in the knowledge graph 308 connected to the alarm type node via episode edge(s) and identifying response nodes within the knowledge graph 308 connected to episode node(s) from the set of episode nodes via responses edge(s). By doing so, example embodiments, enable analysis of operator actions associated with tags (e.g., instrument tags, logical tags, and/or the like) in the same process unit, different process units, and/or different instances of control systems.

In some embodiments, the system 160 (e.g., operator action analyzer 163 thereof) generates a set of corrective actions 406 for the abnormal condition based on the operator action data 404 and using one or more machine learning models and/or generative AI models such as, for example, pre-trained language models (e.g., GPT or the like). In some embodiments, the one or more machine learning models comprise an ensemble machine learning model. In some embodiments, the operator action data 404 comprises operator actions identified across multiple abnormal condition events (e.g., multiple alarm episodes) for the same abnormal condition type. In some embodiments, the one or more machine learning models and/or generative AI models analyze the operator actions from the operator action data 404 to identify similar actions taken to resolve the abnormal condition. In some embodiments, the similar actions are grouped together to generate the set of unique operator actions, where each unique operator action in the set represents a distinct way of handling the abnormal condition derived from the operator action data 404. In some embodiments, the set of corrective actions 406 comprise operator action(s) selected from the operator action data 404 and determined by the system 160 as optimal for resolving the abnormal condition. In some embodiments, generating the set of corrective actions 406 comprises grouping, using the one or more machine learning models and/or one or more generative AI models, the operator actions from the operator action data 404 to generate a set of unique operator actions based on occurrence across one or more abnormal condition events for the same abnormal condition type (e.g., different alarm episodes of a particular alarm type corresponding to the abnormal condition). For example, in some embodiments, the one or more machine learning models and/or generative AI model may be configured to group operator actions from the operator action data 404 to generate a set of unique operator actions, wherein the set of corrective actions 406 may comprise the set of unique operator actions. In some embodiments, the operator action data 404 may comprise one or more sets of operator actions.

In some embodiments, the system 160 identifies root cause(s) 408 of the abnormal condition based on the knowledge graph and/or other data such as process values and limit deviations. For example, in some embodiments, the system 160 may generate the root cause 408 based on one or more of operator actions identified from the knowledge graph, related tag transient state detection based on the knowledge graph, tag to tag correlations from the knowledge graph, and/or historical process values and limit deviations for related tags. In some embodiments, the system 160 identifies the root cause 408 using a hybrid approach that comprises a first root cause identification process and a second root cause identification process that may be performed in parallel. In some embodiments, the output from each of the first root cause identification process and the second root cause identification process comprises a set of tags representative of a set of candidate root causes for an abnormal condition. In some embodiments, the system 160 merges the output of the first root cause identification process (e.g., a first set of tags representative of a first set of candidate root causes for an abnormal condition) and the output of the second root cause identification process (e.g., a second set of tags representative of a second set of candidate root cause for the abnormal condition). In some embodiments, merging the output of the first and second root cause identification processes may comprise reconciling conflicts between the outputs and deduplicating.

In some embodiments, generating the root cause using the first root cause identification process comprises identifying an initial tag. In some embodiments, the initial tag may be the tag closer to the asset or tag associated with the abnormal condition (e.g., tag where the abnormal condition is detected). In some embodiments, in response to identifying the initial tag, the system 160 moves to more distant tags based on the connections represented in the knowledge graph. For example, system 160 may traverse the knowledge graph along connections thereof starting from the initial tag to identify tags associated with a transient state. In some embodiments, the system 160 identifies tags associated with a transient state as a candidate root cause of the abnormal condition. In some embodiments, the system 160 filters the list of tags identified as having transient states by checking equipment and instruments related to the abnormal condition tag in the knowledge graph. In some embodiments, the filtering identifies which of these equipment and instruments also have alerts reported from asset reliability applications. In some embodiments, tags associated with equipment or instruments that have such alerts from asset reliability applications may be retained as candidate root causes. In this regard, in some embodiments, the first root cause identification process is a transient state-based root cause identification process and comprises identifying tag(s) in the knowledge graph associated with a transient state (e.g., tags where transient state has been detected). In some embodiments, a transient state represents an unstable state. By way of example, a transient state may represent a period when a process, system, and/or the like is not stable.

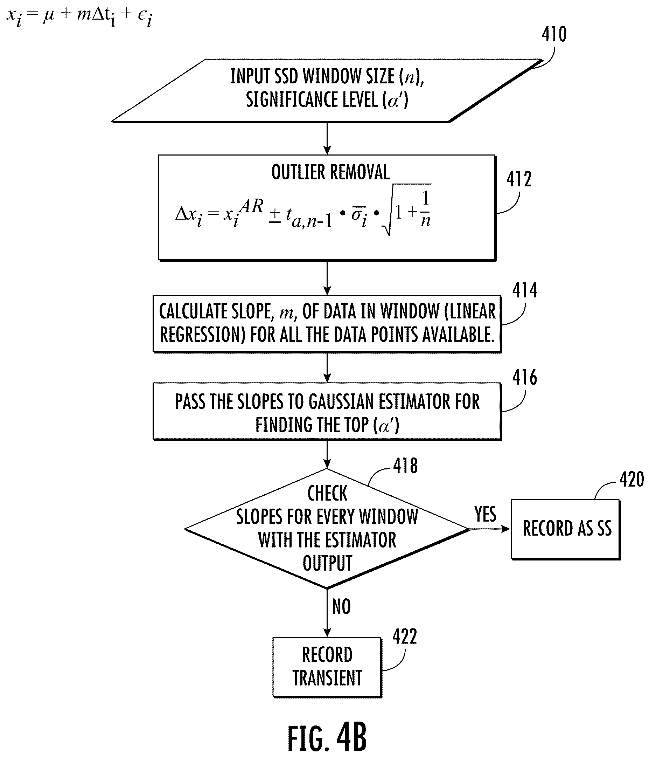

In some embodiments, the system 160 (e.g., steady transient state detector 165 thereof) comprises and/or leverages one or more transient state detection algorithms, such as a steady and transient state detection algorithm for a moving window, to detect tags associated with a transient state. A non-limiting example of such transient state algorithm is provided in FIG. 4B. As shown in FIG. 4B, in some embodiments, application of the transient state detection algorithm may comprise inputting 410 sliding window size (e.g., SSD window size) and significance level; removing 412 outliers; calculating 414 slope of data in the window (e.g., linear regression) for available data points; passing 416 the slopes to Gaussian Estimator for determining the top significance level; and checking 418 the slopes for each window with the estimator output. A steady state 420 may be recorded in response to an affirmative determination and a transient state 422 may be recorded in response to a non-affirmative determination.

In some embodiments, the second root cause identification process comprises identifying an abnormal tag (e.g., tag associated with an abnormal condition) and identifying, using the knowledge graph 308 a set of tags having flow relationships with the abnormal tag. In some embodiments, the system 160 determines process correlation (e.g., linear and/or non-linear correlation) with respect to the abnormal tag. In some embodiments, the system 160 identifies tags with correlations from the set of tags having flow relationships with the abnormal tag. In some embodiments, the system 160 (e.g., limit deviation analyzer 166 thereof) determines deviations from operating limits (e.g., typical operating limits) during abnormal condition for the tags with correlations. For example, the system 160 may determine such operating limits using historical and controller configuration data. In some embodiments, the system 160 may apply the second root cause identification process to historical occurrences of the same type of abnormal condition in history data (e.g., historical events and process values) to identify characteristic patterns of correlations and limit deviations that have preceded past instances of the abnormal condition. In some embodiments, such historical pattern analysis enables the ensemble machine learning algorithms to leverage historical pattern data when generating the final list of candidate root cause tags.

In some embodiments, the system 160 (e.g., root cause detector 164 thereof) generates a final set of tags based on the set of tags output by the first root cause detection process and the second set of tags output by the second root cause detection process. In some embodiments, the system 160 merges the outputs as described above. In some embodiments, the root cause detector 164 comprises and/or leverages an ensemble machine learning model to perform one or more steps/operations associated with root cause detection, as described herein. In some embodiments, such ensemble machine learning model comprises supervised and/or unsupervised machine learning models. In some embodiments, the system 160 may be configured to predict potential root cause and abnormal condition. In some embodiments, the root cause identification method described herein may be extended to predict potential root causes and future abnormal conditions. For example, in some embodiments, the system 160 may apply machine learning methods trained on historical patterns of transient states and process deviations that preceded past abnormal conditions to predict potential root causes and/or future occurrence of abnormal conditions. In some embodiments, the system 160 may analyze historical data to identify characteristic patterns of transient states, limit deviations, and/or tag correlations that have historically preceded specific types of abnormal conditions. In some embodiments, the system 160 may apply one or more machine learning models to current process data to detect such characteristic patterns and generate predictions of potential root causes and/or abnormal conditions that may occur. In some embodiments, such predictive capabilities may enable operators to take preventive actions before an abnormal condition manifests, thereby reducing plant downtime and improving operational safety.

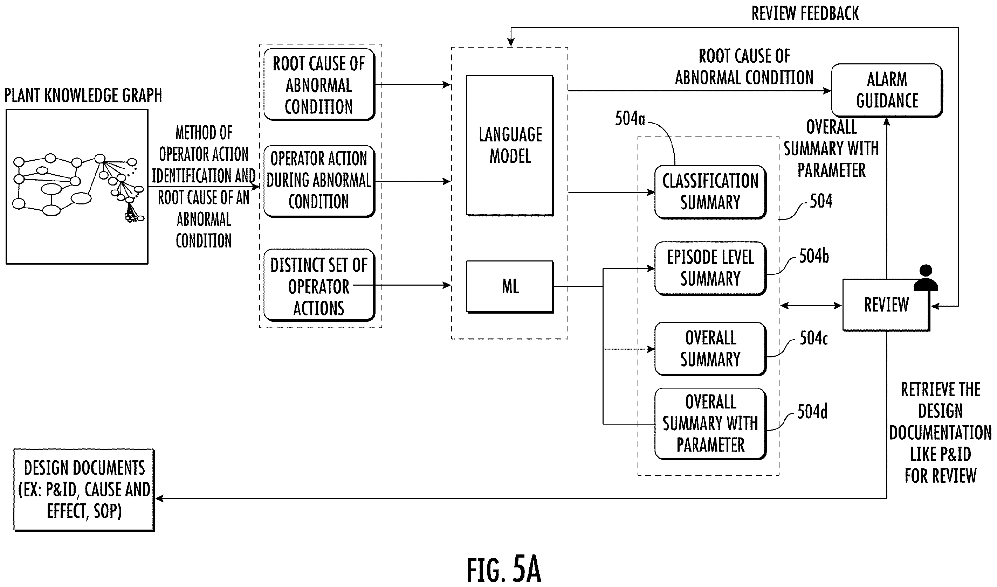

Referring to FIG. 5A, an example data flow is provided in accordance with at least one example embodiment of the present disclosure. In some example embodiments, the data structures and processes shown and described with reference to the data flow diagram of FIG. 5A may be generated, performed, or otherwise facilitated by the various systems and apparatuses shown and described with reference to FIGS. 1A, 1B, and 2. Specifically, FIG. 5A represents an example data flow for generating summaries in accordance with at least one example embodiment of the present disclosure.

In some embodiments, the system 160 generates one or more summaries 504 for the abnormal condition using a generative AI model and based on the operator action data 404, set of corrective actions 406, and/or root cause 408 for the abnormal condition. In some embodiments, the input to the generative AI model comprises the operator action data 404, set of corrective actions 406, and/or root cause for the abnormal condition. For example, a prompt comprising one or more of the operator action data 404, set of corrective actions 406, or root cause 408 may be provided to the generative AI model. In some embodiments, the one or more summaries may comprise a classification summary 504a that captures unique operator actions for handling an abnormal condition. For example, the classification summary may comprise one or more operator action groups, where each operation action group comprise one or more similar historical operator actions taken to resolve the abnormal condition. Alternatively, or additionally, in some embodiments, the one or more summaries 504 may comprise episode level summary 504b that captures the unique operator actions (and corresponding parameter changes) taken to resolve an alarm episode/event corresponding to an abnormal condition event. In some embodiments, the parameter changes may be represented as timeseries data (e.g., in the order of time). Alternatively, or additionally, in some embodiments, the one or more summaries 504 may comprise an overall summary 504c that captures unique operator actions taken to resolve the abnormal condition across a plurality of episodes (e.g., across substantially all abnormal condition events for the abnormal condition type or corresponding alarm type). For example, the overall summary may comprise a list of unique operator actions to resolve the abnormal across a plurality of alarm episodes. Alternatively, or additionally, in some embodiments, the one or more summaries 504 may comprise augmented overall summary 504d that captures unique operator actions taken to resolve the abnormal condition along with predominant action parameter acted upon with its direction information.

In some embodiments, the system 160 provides the operator action data, set of corrective actions, root cause, and/or one or more summaries to a user device 170 associated with a reviewer user (e.g., process expert or other reviewer). In some embodiments, the system 160 may receive user input (user feedback) with respect to the operator action data, set of corrective actions, root cause, and/or one or more summaries and update the operator action data, set of corrective actions, root cause, and/or one or more summaries based on the user input. In some embodiments, providing the one or more operator action data, set of corrective actions, root cause, and/or one or more summaries comprises providing a graphical user interface that includes the operator action data, set of corrective actions, root cause, and/or one or more summaries. In some embodiments, the one or more summaries are hierarchically represented for review by the reviewer (e.g., process expert or other reviewer). In some embodiments, the hierarchical representation presents the one or more summaries in an order comprising the classification summary, the overall summary with parameter reference (e.g., augmented overall summary), and the episode level summary along with the root cause of the abnormal condition. In some embodiments, the hierarchical representation provides complete details of the abnormal condition and enables the reviewer to select the appropriate guidance for operators. For example, the reviewer may review the hierarchically presented summaries and select one or more summaries or corrective actions to be provided to operators upon subsequent occurrence of the same type of abnormal condition. In some embodiments, the review feedback (e.g., user input, user feedback, or similar terms) may be processed using language models or machine learning techniques for reconciliation of summaries. For example, in some embodiments, the reconciliation process may involve the generative AI model receiving the user feedback along with the original one or more summaries (e.g., classification summary, overall summary, episode-level summaries, and/or augmented overall summary). In some embodiments, the system 160 may regenerate or modify the one or more summaries to adhere to the reviewer's inputs. Examples of reconciliation may include, but are not limited to, adjusting classifications or groupings based on expert corrections, modifying summary content based on reviewer edits, and/or incorporating approved changes into future summary generation.

In some embodiments, the system 160 automatically provides the set of corrective actions 406 and/or the one or more summaries 504 for display on a user device 170 associated with an operator in response to a subsequent abnormal condition of the same type (e.g., re-occurrence of the same type of abnormal condition). Alternatively, or additionally, in some embodiments, the system 160 automatically provides the operator action data and/or root cause for display on the user device 170.

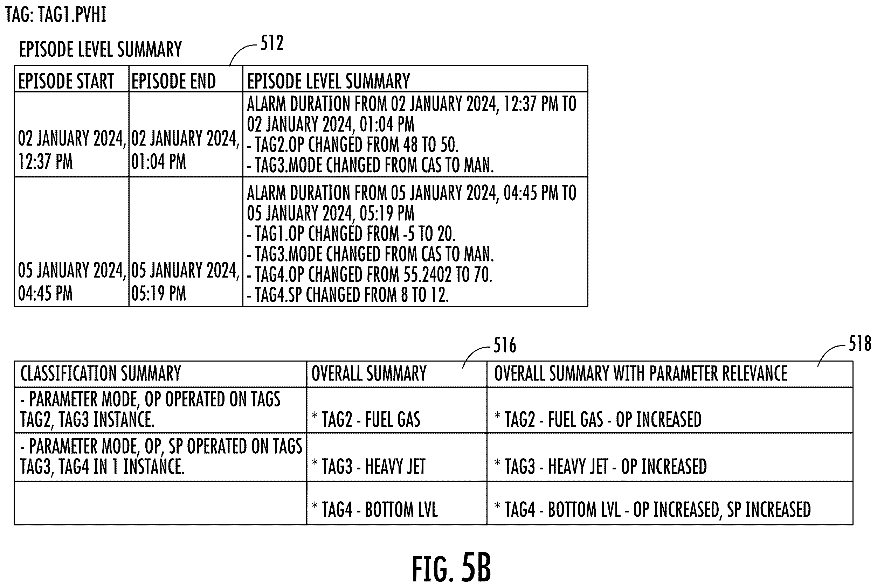

FIG. 5B provides example summaries in accordance with at least one example embodiments of the present disclosure. As shown in FIG. 5B, the summaries may include episode level summary 512, classification summary 514, overall summary 516, and augmented overall summary 518.

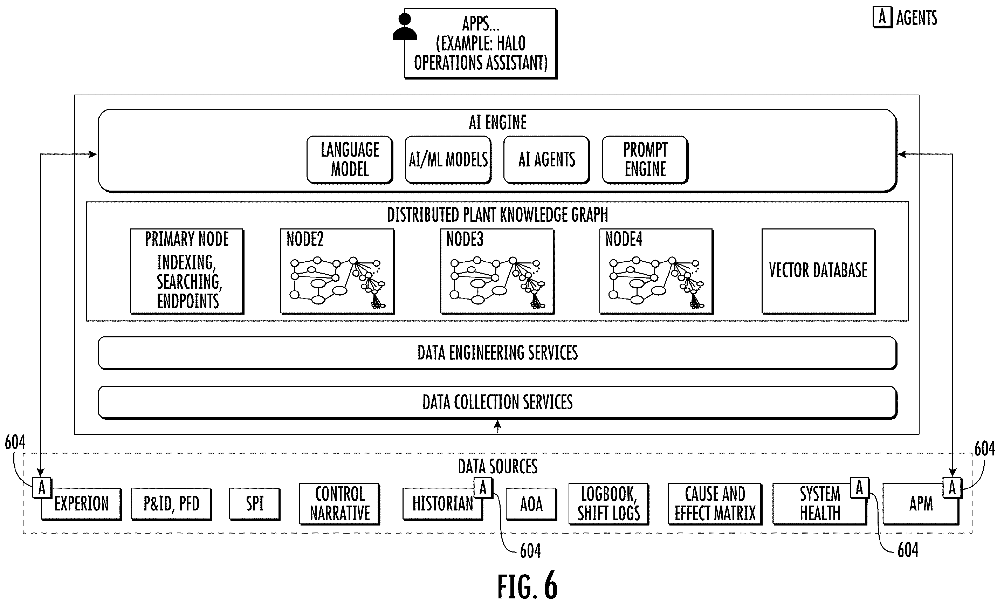

FIG. 6 illustrates an example implementation of the system 160. As shown in FIG. 6, in some embodiments, the system 160 may be configured automatically detect the applications and systems in a Purdue model. The system 160 may automatically identify and digitize the plant's process and system data. In some embodiments, the system 160 may host the distributed knowledge graph comprising data from applications, systems, engineering configuration, process and system design documents, as described herein. The data sources may comprise or leverage AI agents 604 to autonomously (e.g., auto discover) the applications, systems, engineering configuration, process and system design documents, and or changes associated with applications, systems, engineering configuration, process and system design document, and ingest data or updates from the applications, systems, engineering configuration, process and system design documents into the system 160. The system 160 may digitize the information and make them available in the knowledge graph which may be hosted in one or more nodes distributed across process network to, for example, facilitate scaling for large volumes of graph content. The system 160 may provide APIs for other application to access information available in the knowledge graph. The system 160 may have the capability for searching and indexing to fetch the relevant information for various components of the system 160 or leveraged by the system, or other applications across the distributed knowledge graph.

In some embodiments, the system 160 provides for applications and users to register local databases to make their data available in the distributed knowledge graph. The system may comprise one or more components configured to facilitate indexing and searching relevant information from the distributed knowledge graph. The system 160 may include a knowledge graph query interface that allows natural language queries to register local databases. The system 160 may be configured to ensure autoscaling to multiple servers/machines based on the volume of data stored and individual nodes compute capabilities. The system 160 may include one or more interfaces that enable natural language querying, standard graph querying language such as cypher, sql, industrial standards such as OPC and API queries. The system 160 may leverage one or more machine learning techniques to support natural language querying.

### EXAMPLE METHODS

Having described example systems, apparatuses, and data flows in accordance with the present disclosure, example processes according to at least some embodiments of the present disclosure will now be discussed. It will be appreciated that each of the flowcharts depicts an example computer-implemented process that is performable by one or more of the apparatuses, systems, devices, and/or computer program products described herein, for example utilizing one or more of the specially configured components thereof.

The blocks indicate operations of each process. Such operations may be performed in any of a number of ways, including, without limitation, in the order and manner as depicted and described herein. In some embodiments, one or more blocks of any of the processes described herein occur in-between one or more blocks of another process, before one or more blocks of another process, in parallel with one or more blocks of another process, and/or as a sub-process of a second process. Additionally, or alternatively, any of the processes in various embodiments include some or all operational steps described and/or depicted, including one or more optional blocks in some embodiments. With regard to the flowcharts illustrated herein, one or more of the depicted block(s) in some embodiments is/are optional in some, or all, embodiments of the disclosure. Optional blocks are depicted with broken (or "dashed") lines. Similarly, it should be appreciated that one or more of the operations of each flowchart may be combinable, replaceable, and/or otherwise altered as described herein.

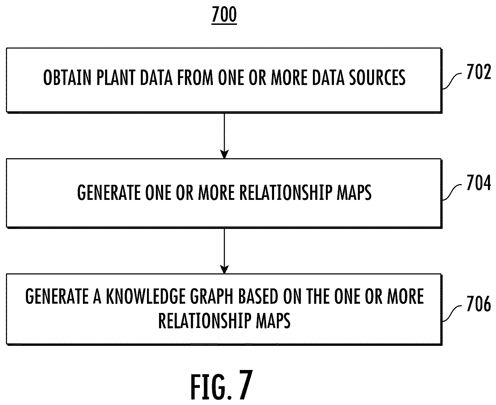

FIG. 7 illustrates an example computer-implemented process 700 for generating a knowledge graph in accordance with at least one example embodiment of the present disclosure. The process 700 may be implemented by one or more computing devices, entities, or systems described herein.

In some embodiments, the process 700 is embodied by computer program code stored on a non-transitory computer-readable storage medium of a computer program product configured for execution to perform the process as depicted and described. Alternatively, or additionally, in some embodiments, the process 700 is performed by one or more specially configured computing devices, such as the apparatus 200 alone or in communication with one or more other component(s), device(s), system(s), and/or the like. In this regard, in some such embodiments, the apparatus 200 is specially configured by computer-coded instructions (e.g., computer program instructions) stored thereon, for example in the memory 204 and/or another component depicted and/or described herein and/or otherwise accessible to the apparatus 200, for performing the operations as depicted and described. For purposes of simplifying the description, the process 700 is described as performed by and from the perspective of the apparatus 200.

In some embodiments, the process 700 comprise at operation 702, obtaining plant data. In some embodiments, the plant data comprises data associated with a plant. In some embodiments, the plant data comprises various data generated and/or maintained via application(s) and/or system(s) associated with an OT network associated with the plant 120. In some embodiments, obtaining the plant data 304 comprises detecting such application(s) and/or system(s) associated with the OT network, and accessing various data generated and/or maintained via the detected application(s) and system(s). In this regard, in some embodiments, the plant data may comprise asset models, tag information, operating limits, historical process alarms, historical system alarms, historical operator actions, DCS tag to P&ID mapping information, tag to equipment relationship information, process flow, equipment/instrument to equipment relationship information, historical events, historical incidents, information or task between operating shifts, alarm object analysis data, correlation matrix for process variables, design and behavior of control strategies of a system or process, system performance data, asset performance data, and/or historical process data (e.g., historical events, historical alarms, and historical process values).

In some embodiments, the process 700 comprise at operation 704, generating one or more relationship maps representative and/or indicative of relationships (e.g., including direct or indirection dependency relationships) among various components of the plant and across various data sources (e.g., various applications and systems associated with the OT network associated with the plant) using the plant data obtained from the various data sources. For example, the apparatus 200 may detect and map relationships between configurations, equipment, instruments, applications, and systems associated with the plant.

In some embodiments, the process 700 comprise at operation 706, generating a knowledge graph 308 (e.g., distributed knowledge graph 308) based on the one or more relationship maps and/or plant data. For example, the knowledge graph may include a plantwide configuration mapping between application and system configurations that enables pro-active configuration change management and notifications on the impact of configuration changes.

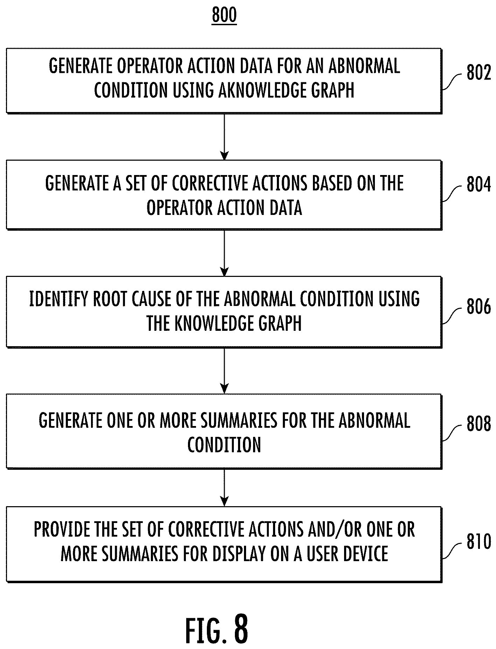

FIG. 8 illustrates an example computer-implemented process 800 for identifying root cause of an abnormal condition and generating guidance (e.g., one or more summaries) for resolving the abnormal condition in accordance with at least one example embodiment of the present disclosure. The process 800 may be implemented by one or more computing devices, entities, or systems described herein.

In some embodiments, the process 800 is embodied by computer program code stored on a non-transitory computer-readable storage medium of a computer program product configured for execution to perform the process as depicted and described. Alternatively, or additionally, in some embodiments, the process 800 is performed by one or more specially configured computing devices, such as the apparatus 200 alone or in communication with one or more other component(s), device(s), system(s), and/or the like. In this regard, in some such embodiments, the apparatus 200 is specially configured by computer-coded instructions (e.g., computer program instructions) stored thereon, for example in the memory 204 and/or another component depicted and/or described herein and/or otherwise accessible to the apparatus 200, for performing the operations as depicted and described. For purposes of simplifying the description, the process 800 is described as performed by and from the perspective of the apparatus 200.

In some embodiments, the process 800 comprise at operation 802, generating operator action data 404 for an abnormal condition (e.g., a particular abnormal condition type/alarm type) using a knowledge graph. For example, in some embodiments, the apparatus 200 leverages the process, equipment, and instrument information in the knowledge graph (e.g., including the logical connections and relationships represented in the knowledge graph) to generate operator action data for an abnormal condition.

In some embodiments, the process 800 comprise at operation 804, generating a set of corrective actions 406 for the abnormal condition based on the operator action data 404 and using one or more machine learning models and/or generative AI models. In some embodiments, the one or more machine learning models comprise an ensemble machine learning model. In some embodiments, the set of corrective actions comprise operator action(s) selected from the operator action data 404 and determined as accurate for resolving the abnormal condition. In some embodiments, generating the set of corrective actions comprises grouping, using the one or more machine learning models and/or one or more generative AI models, the operator actions from the operator action data into the set of unique operator actions based on occurrence across one or more abnormal condition events for the same abnormal condition type (e.g., different instances of abnormal condition for the same type of abnormal condition).

In some embodiments, the process 800 comprise at operation 806, identifying a root cause of the abnormal condition based on the knowledge graph and/or other data such as process values and limit deviations. For example, in some embodiments, the apparatus 200 may generate the root cause based on one or more of operator actions from the knowledge graph, related tag transient state detection based on the knowledge graph, tag to tag correlations from the knowledge graph, and historical process values and limit deviations for related tags.

In some embodiments, the process comprises at operation 808, generating one or more summaries for the abnormal condition using a generative AI model and based on the operator action data, set of corrective actions, and/or root cause for the abnormal condition. In some embodiments, the input to the generative AI model comprises the operator action data, set of corrective actions, and/or root cause for the abnormal condition. In some embodiments, the one or more summaries may comprise a classification summary that captures unique actions for handling an abnormal condition. Alternatively, or additionally, in some embodiments, the one or more summaries 504 may comprise episode level summary 504b that captures the unique operator actions (and corresponding parameter changes) taken to resolve an alarm event corresponding to an abnormal condition event. Alternatively, or additionally, in some embodiments, the one or more summaries 504 may comprise an overall summary that captures unique operator actions taken to resolve the abnormal condition across a plurality of episodes (e.g., across substantially all abnormal condition events for the abnormal condition type). Alternatively, or additionally, in some embodiments, the one or more summaries may comprise augmented overall summary 504d that captures unique operator actions taken to resolve to the abnormal condition along with predominant action parameter acted upon with its direction information.

In some embodiments, the process comprises at operation 810 automatically provides the set of corrective actions 406 and/or the one or more summaries 504 for display on a user device 170 associated with an operator in response to a subsequent abnormal condition of the same type (e.g., re-occurrence of the same type of abnormal condition).

### Conclusion

Although an example processing system has been described above, implementations of the subject matter and the functional operations described herein can be implemented in other types of digital electronic circuitry, or in computer software, firmware, or hardware, including the structures disclosed in this specification and their structural equivalents, or in combinations of one or more of them.

Embodiments of the subject matter and the operations described herein can be implemented in digital electronic circuitry, or in computer software, firmware, or hardware, including the structures disclosed in this specification and their structural equivalents, or in combinations of one or more of them. Embodiments of the subject matter described herein can be implemented as one or more computer programs, i.e., one or more modules of computer program instructions, encoded on computer storage medium for execution by, or to control the operation of, information/data processing apparatus. Alternatively, or in addition, the program instructions can be encoded on an artificially-generated propagated signal, e.g., a machine-generated electrical, optical, or electromagnetic signal, which is generated to encode information/data for transmission to suitable receiver apparatus for execution by an information/data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

The operations described herein can be implemented as operations performed by an information/data processing apparatus on information/data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a repository management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or information/data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described herein can be performed by one or more programmable processors executing one or more computer programs to perform actions by operating on input information/data and generating output. Processors suitable for the execution of a computer program include, by way of example, both general and special purpose microprocessors, and any one or more processors of any kind of digital computer. Generally, a processor will receive instructions and information/data from a read-only memory or a random access memory or both. The essential elements of a computer are a processor for performing actions in accordance with instructions and one or more memory devices for storing instructions and data. Generally, a computer will also include, or be operatively coupled to receive information/data from or transfer information/data to, or both, one or more mass storage devices for storing data, e.g., magnetic, magneto-optical disks, or optical disks. However, a computer need not have such devices. Devices suitable for storing computer program instructions and information/data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described herein can be implemented on a computer having a display device, e.g., a CRT (cathode ray tube) or LCD (liquid crystal display) monitor, for displaying information/data to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described herein can be implemented in a computing system that includes a back-end component, e.g., as an information/data server, or that includes a middleware component, e.g., an application server, or that includes a front-end component, e.g., a client computer having a graphical user interface or a web browser through which a user can interact with an implementation of the subject matter described herein, or any combination of one or more such back-end, middleware, or front-end components. The components of the system can be interconnected by any form or medium of digital information/data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits information/data (e.g., an HTML page) to a client device (e.g., for purposes of displaying information/data to and receiving user input from a user interacting with the client device). Information/data generated at the client device (e.g., a result of the user interaction) can be received from the client device at the server.

While this specification contains many specific implementation details, these should not be construed as limitations on the scope of any disclosures or of what may be claimed, but rather as descriptions of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

## Claims

1. A computer-implemented method comprising:
obtaining, by one or more processors and from one or more data sources, plant data associated with a process plant;
generating, by the one or more processors, a knowledge graph based on the plant data, wherein the knowledge graph comprises a plurality of operator action nodes corresponding to a plurality of operator actions associated with an abnormal condition;
generating, by the one or more processors, an operator action data for the abnormal condition based on the knowledge graph, wherein the operator action data comprises the plurality of operator actions;
generating, by the one or more processors and using one or more machine learning models, a set of corrective actions based on the operator action data, wherein the set of corrective actions comprises a set of unique operator actions from the operator action data; and
providing, by the one or more processors, the set of corrective actions for display on a user device.

2. The computer-implemented method of claim 1, further comprising:
determining a root cause of the abnormal condition based on the knowledge graph and
using an ensemble machine learning model.

3. The computer-implemented method of claim 1, further comprising generating, using a generative AI model, one or more summaries based on the operator action data or the set of corrective actions.

4. The computer-implemented method of claim 1, wherein generating the knowledge graph comprises:
generating one or more relationship maps based on the plant data; and
generating the knowledge graph based on the one or more relationship maps.

5. The computer-implemented method of claim 1, wherein the one or more data sources comprises one or more applications or systems associated with an operational technology network, wherein obtaining the plant data comprises detecting one or more applications or systems using an agentic system.

6. The computer-implemented method of claim 1, wherein the one or more data sources comprise one or more of a distributed control system, a piping and instrumentation diagram, or process flow diagram.

7. The computer-implemented method of claim 1, wherein the plurality of operator action nodes is connected to one or more alarm event nodes, and wherein the one or more alarm event nodes are connected to an alarm type node corresponding to the abnormal condition.

8. An apparatus comprising at least one processor and at least one memory storing instructions that, when executed by the at least one processor, cause the apparatus to:
obtain, from one or more data sources, plant data associated with a process plant;
generate a knowledge graph based on the plant data, wherein the knowledge graph comprises a plurality of operator action nodes corresponding to a plurality of operator actions associated with an abnormal condition;
generate an operator action data for the abnormal condition based on the knowledge graph, wherein the operator action data comprises the plurality of operator actions;
generate using one or more machine learning models, a set of corrective actions based on the operator action data, wherein the set of corrective actions comprises a set of unique operator actions from the operator action data; and
provide the set of corrective actions for display on a user device.

9. The apparatus of claim 8, further comprising:
determining a root cause of the abnormal condition based on the knowledge graph and
using an ensemble machine learning model.

10. The apparatus of claim 8, further comprising generating, using a generative AI model, one or more summaries based on the operator action data or the set of corrective actions.

11. The apparatus of claim 8, wherein generating the knowledge graph comprises:
generating one or more relationship maps based on the plant data; and
generating the knowledge graph based on the one or more relationship maps.

12. The apparatus of claim 8, wherein the one or more data sources comprises one or more applications or systems associated with an operational technology network, wherein obtaining the plant data comprises detecting one or more applications or systems using an agentic system.

13. The apparatus of claim 8, wherein the one or more data sources comprise one or more of a distributed control system, a piping and instrumentation diagram, or process flow diagram.

14. The apparatus of claim 8, wherein the plurality of operator action nodes is connected to one or more alarm event nodes, and wherein the one or more alarm event nodes are connected to an alarm type node corresponding to the abnormal condition.

15. At least one non-transitory computer-readable storage medium, the at least one non-transitory computer-readable storage medium having computer coded instructions configured to, when executed by at least one processor:
obtain, from one or more data sources, plant data associated with a process plant;
generate a knowledge graph based on the plant data, wherein the knowledge graph comprises a plurality of operator action nodes corresponding to a plurality of operator actions associated with an abnormal condition;
generate an operator action data for the abnormal condition based on the knowledge graph, wherein the operator action data comprises the plurality of operator actions;
generate using one or more machine learning models, a set of corrective actions based on the operator action data, wherein the set of corrective actions comprises a set of unique operator actions from the operator action data; and
provide the set of corrective actions for display on a user device.
